# EUROPEAN PATENT APPLICATION

(11) **EP 4 712 332 A2**
(43) Date of publication of application: **18.03.2026**
(21) Application number: 25213215.4
(22) Date of filing: 05.12.2023
(51) Int. Cl.: H02M 3/28

(54) **POWER SUPPLY APPARATUS, THREE-PHASE TRANSFORMER CIRCUIT, AND CHARGING PILE**

(30) Priority: 05.12.2022 CN 202211546424
(62) Divisional of application: 23214222.4
(71) Applicant: Huawei Digital Power Technologies Co., Ltd., Shenzhen, Guangdong 518043 (CN)
(72) Inventor: PAN, Denghai, Shenzhen, 518043 (CN); WU, Shuo, Shenzhen, 518043 (CN); QIU, Yuping, Shenzhen, 518043 (CN)
(74) Representative: Epping - Hermann - Fischer

(57) **Abstract**

This application provides a power supply apparatus, a three-phase transformer circuit, and a charging pile. A connection relationship or a turns ratio of at least one of primary-side windings or secondary-side windings in a three-phase transformer may be switched by using a winding switching switch, to extend an output voltage range of the power supply apparatus or the charging pile, and improve conversion efficiency of the power supply apparatus or the charging pile. The power supply apparatus provided in this application includes a three-phase transformer and a winding switching switch module. The winding switching switch module includes at least one of a winding connection switching switch group or a winding turn number switching switch group. The winding switching switch module is configured to switch a turns ratio or a connection manner of the three-phase transformer. The winding connection switching switch group is configured to switch a connection manner of the three primary-side windings or a connection manner of the three secondary-side windings, and the winding turn number switching switch group is configured to switch turn numbers of the three primary-side windings or turn numbers of the three secondary-side windings, to extend the output voltage range of the power supply apparatus or the charging pile.

## Description

### TECHNICAL FIELD

This application relates to the field of electric vehicle technologies, and in particular, to a power supply apparatus, a three-phase transformer circuit, and a charging pile.

### BACKGROUND

An existing charging pile may charge an electric vehicle through a power grid, and the electric vehicle may discharge power to the power grid or a load through a bidirectional charging pile. Voltage ranges of charging voltages or discharging voltages of various types of electric vehicles are different. Therefore, how the bidirectional charging pile supports the various types of electric vehicles is a technical problem to be resolved.

### SUMMARY

This application provides a power supply apparatus, a three-phase transformer circuit, and a charging pile. A connection relationship or a turns ratio of at least one of primary-side windings or secondary-side windings in a three-phase transformer may be switched by using a winding switching switch, to extend an output voltage range of the power supply apparatus or the charging pile, and improve conversion efficiency of the power supply apparatus or the charging pile.

According to a first aspect, this application provides a power supply apparatus. The power supply apparatus includes a three-phase transformer and a winding switching switch module. The three-phase transformer includes three primary-side windings and three secondary-side windings. Each of the three primary-side windings is configured to be connected to a primary-side three-phase bridge arm circuit. Each of the three secondary-side windings is configured to be connected to a secondary-side three-phase bridge arm circuit. The winding switching switch module includes at least one of a winding connection switching switch group or a winding turn number switching switch group. The winding switching switch module is configured to switch a turns ratio or a connection manner of the three-phase transformer. The winding connection switching switch group is configured to switch a connection manner of the three primary-side windings or a connection manner of the three secondary-side windings. The connection manner of the three primary-side windings or the connection manner of the three secondary-side windings includes a sequential connection or a one-end interconnection. The winding turn number switching switch group is configured to switch turn numbers of the three primary-side windings or turn numbers of the three secondary-side windings. Each of the three primary-side windings or the three secondary-side windings includes a tap.

A winding switching switch in the power supply apparatus provided in this embodiment of this application may switch a connection relationship or a turns ratio of at least one of the primary-side windings or the secondary-side windings in the three-phase transformer, to extend an output voltage range of the power supply apparatus or a charging pile, and improve conversion efficiency of the power supply apparatus or the charging pile.

In a possible implementation, one end of the three-phase primary-side winding is configured to be connected to each of three bridge arm midpoints of the primary-side three-phase bridge arm circuit, one end of the three-phase secondary-side winding is configured to be connected to each of three bridge arm midpoints of the secondary-side three-phase bridge arm circuit, and the winding connection switching switch group includes at least one of a primary-side winding connection switching switch group or a secondary-side winding connection switching switch. The primary-side winding connection switching switch group is configured to connect the other end of each of the three primary-side windings and a common end of the three primary-side windings, or is configured to sequentially connect the three primary-side windings through the other end of each of the three primary-side windings. The secondary-side winding connection switching switch group is configured to connect the other end of each of the three secondary-side windings and a common end of the three secondary-side windings, or is configured to sequentially connect the three secondary-side windings through the other end of each of the three secondary-side windings.

In a possible implementation, each of the primary-side winding connection switching switch group and the secondary-side winding connection switching switch group includes three winding connection switching switches. Each winding connection switching switch includes a fixed end and two switching ends. The fixed end of each of the three winding connection switching switches is configured to be connected to the other end of each of the three primary-side windings or the other end of each of the three secondary-side windings. One switching end of each of the three winding connection switching switches is configured to be connected to one switching end of each of the other two of the three winding connection switching switches, to form the common end of the three primary-side windings or the common end of the three secondary-side windings. The other switching end of each of the three winding connection switching switches is configured to be connected to one end of each of the three primary-side windings or one end of each of the three secondary-side windings.

In this embodiment of this application, the winding switching switch in the power supply apparatus may switch a connection relationship of at least one of the primary-side windings or the secondary-side windings in the three-phase transformer, to extend the output voltage range of the power supply apparatus or the charging pile, and improve the conversion efficiency of the power supply apparatus or the charging pile.

In a possible implementation, the winding turn number switching switch group includes at least one of a primary-side winding turn number switching switch group or a secondary-side winding turn number switching switch group. The primary-side winding turn number switching switch group is configured to connect the other end of each of the three primary-side windings or the tap of each of the three primary-side windings and a common end of the three primary-side windings, or is configured to sequentially connect the three primary-side windings through the other end of each of the three primary-side windings or the tap of each of the three primary-side windings. The secondary-side winding turn number switching switch group is configured to connect the other end of each of the three secondary-side windings or the tap of each of the three secondary-side windings and a common end of the three secondary-side windings, or is configured to sequentially connect the three secondary-side windings through the other end of each of the three secondary-side windings or the tap of each of the three secondary-side windings.

In a possible implementation, at least one of the primary-side winding turn number switching switch group or the secondary-side winding turn number switching switch group includes three winding turn number switching switches. Each winding turn number switching switch includes a fixed end and two switching ends. Fixed ends of the three winding turn number switching switches are configured to be connected, to form the common end of the three primary-side windings. One switching end of each of the three winding turn number switching switches is configured to be connected to the other end of each of the three primary-side windings or the other end of each of the three secondary-side windings, and the other switching end of each of the three winding turn number switching switches is configured to be connected to the tap of each of the three primary-side windings or the tap of each of the three secondary-side windings.

In this embodiment of this application, the winding switching switch in the power supply apparatus may switch turn numbers of at least one of the primary-side windings or the secondary-side windings in the three-phase transformer, to switch the turns ratio of the three-phase transformer, so as to extend the output voltage range of the power supply apparatus or the charging pile, and improve the conversion efficiency of the power supply apparatus or the charging pile.

In a possible implementation, the winding switching switch module includes at least one of a primary-side winding switching switch module or a secondary-side winding switching switch module. The primary-side winding switching switch module is configured to connect the other end of each of the three primary-side windings or the tap of each of the three primary-side windings and a common end of the three primary-side windings, or is configured to sequentially connect the three primary-side windings through the other end of each of the three primary-side windings or the tap of each of the three primary-side windings. The secondary-side winding switching switch module is configured to connect the other end of each of the three secondary-side windings or the tap of each of the three secondary-side windings and a common end of the three secondary-side windings, or is configured to sequentially connect the three secondary-side windings through the other end of each of the three secondary-side windings or the tap of each of the three secondary-side windings.

In a possible implementation, the primary-side winding switching switch module or the secondary-side winding switching switch module includes three winding connection switching switches and three winding turn number switching switches. Each winding connection switching switch includes a fixed end and two switching ends. Each winding turn number switching switch includes a fixed end and two switching ends. The fixed end of each winding connection switching switch is configured to be connected to the fixed end of each winding turn number switching switch.

One switching end of each of the three winding connection switching switches is configured to be connected to one switching end of each of the other two of the three winding connection switching switches, to form the common end of the three primary-side windings, and the other switching end of each of the three winding connection switching switches is configured to be connected to one end of each of the three primary-side windings. Alternatively, one switching end of each of the three winding connection switching switches is configured to be connected to one switching end of each of the other two of the three winding connection switching switches, to form the common end of the three secondary-side windings, and the other switching end of each of the three winding connection switching switches is configured to be connected to one end of each of the three secondary-side windings.

One switching end of each of the three winding turn number switching switches is configured to be connected to the other end of each of the three primary-side windings, and the other switching end of each of the three winding turn number switching switches is configured to be connected to the tap of each of the three primary-side windings. Alternatively, one switching end of each of the three winding turn number switching switches is configured to be connected to the other end of each of the three secondary-side windings, and the other switching end of each of the three winding turn number switching switches is configured to be connected to the tap of each of the three secondary-side windings.

The winding switching switch in the power supply apparatus provided in this embodiment of this application may switch a connection relationship or a turns ratio of at least one of the primary-side windings or the secondary-side windings in the three-phase transformer, to extend the output voltage range of the power supply apparatus or the charging pile, and improve the conversion efficiency of the power supply apparatus or the charging pile.

In a possible implementation, the winding switching switch module is configured to switch at least one of the turns ratio or the connection manner of the three-phase transformer based on at least one of a voltage at two ends of the primary-side three-phase bridge arm circuit or a voltage at two ends of the secondary-side three-phase bridge arm circuit.

In a possible implementation, the winding switching switch module is configured to switch at least one of the turn numbers or the connection manner of the three secondary-side windings in response to a result of comparing the voltage at the two ends of the secondary-side three-phase bridge arm circuit with at least one preset value.

In a possible implementation, the winding switching switch module is configured to: in response to that the voltage at the two ends of the secondary-side three-phase bridge arm circuit is greater than or equal to a first preset value, connect the other end of each of the three secondary-side windings and a common end of the three secondary-side windings. Alternatively, the winding switching switch module is configured to: in response to that the voltage at the two ends of the secondary-side three-phase bridge arm circuit is less than a first preset value, sequentially connect the three secondary-side windings through the other end of each of the three secondary-side windings.

It may be understood that the winding switching switch module in the power supply apparatus provided in this embodiment of this application may switch a connection relationship of the three secondary-side windings based on the voltage at the two ends of the secondary-side three-phase bridge arm circuit. In this way, the power supply apparatus can charge different types of electric vehicles, and the power supply apparatus can supply power by using the different types of electric vehicles, without generating an additional energy loss. This helps improve conversion efficiency.

In a possible implementation, the winding switching switch module is configured to: in response to that the voltage at the two ends of the secondary-side three-phase bridge arm circuit is greater than or equal to a second preset value, connect the other end of each of the three secondary-side windings and a common end of the three secondary-side windings. Alternatively, the winding switching switch module is configured to: in response to that the voltage at the two ends of the secondary-side three-phase bridge arm circuit is less than a second preset value, sequentially connect the three secondary-side windings through the tap of each of the three secondary-side windings.

In a possible implementation, the winding switching switch module is configured to: in response to that the voltage at the two ends of the secondary-side three-phase bridge arm circuit is greater than or equal to a third preset voltage value, connect the other end of each of the three secondary-side windings and a common end of the three secondary-side windings. Alternatively, the winding switching switch module is configured to: in response to that the voltage at the two ends of the secondary-side three-phase bridge arm circuit is less than a fourth preset voltage value and is greater than or equal to a third preset voltage value, connect the tap of each of the three secondary-side windings and a common end of the three secondary-side windings. Alternatively, the winding switching switch module is configured to: in response to that the voltage at the two ends of the secondary-side three-phase bridge arm circuit is less than a third preset voltage value and is greater than or equal to a fifth preset voltage value, sequentially connect the three secondary-side windings through the tap of each of the three secondary-side windings. Alternatively, the winding switching switch module is configured to: in response to that the voltage at the two ends of the secondary-side three-phase bridge arm circuit is less than a fifth preset voltage value, sequentially connect the three secondary-side windings through the other end of each of the three secondary-side windings.

It may be understood that the winding switching switch module in the power supply apparatus provided in this embodiment of this application may switch the turn numbers and the connection manner of the three secondary-side windings based on the voltage at the two ends of the secondary-side three-phase bridge arm circuit. In this way, the power supply apparatus can charge different types of electric vehicles, and the power supply apparatus can supply power by using the different types of electric vehicles, without generating an additional energy loss. This helps improve conversion efficiency.

In a possible implementation, the winding switching switch module is configured to switch at least one of the turn numbers or the connection manner of the three secondary-side windings in response to a result of comparing the voltage at the two ends of the primary-side three-phase bridge arm circuit with at least one preset value.

It may be understood that the winding switching switch module in the power supply apparatus provided in this embodiment of this application may switch the turn numbers and the connection manner of the three secondary-side windings based on the voltage at the two ends of the primary-side three-phase bridge arm circuit. In this way, the power supply apparatus can charge an electric vehicle by using different types of power supplies, and the power supply apparatus can supply power to the different types of power supplies, without generating an additional energy loss. This helps improve conversion efficiency.

According to a second aspect, this application provides a three-phase transformer circuit. A three-phase transformer includes three primary-side windings, three secondary-side windings, and a winding switching switch module. The three primary-side windings and the three secondary-side windings transmit a three-phase alternating current through a magnetic core coupling of the three-phase transformer. The winding switching switch module includes at least one of a winding connection switching switch group or a winding turn number switching switch group. The winding connection switching switch group is configured to switch a connection manner of at least one of the three primary-side windings or the three secondary-side windings. A connection manner of the three primary-side windings or a connection manner of the three secondary-side windings includes a two-end sequential connection or a one-end connection. The winding turn number switching switch group is configured to switch turn numbers of at least one of the three primary-side windings or the three secondary-side windings. Each of the three primary-side windings or the three secondary-side windings includes a tap.

The winding switching switch module in the three-phase transformer circuit provided in this embodiment of this application may switch a connection manner or turn numbers of the primary-side windings or the secondary-side windings in the three-phase transformer, to switch a ratio of a primary-side voltage to a secondary-side voltage of the three-phase transformer, extend an output voltage range of a power supply apparatus or a charging pile, and improve conversion efficiency of the power supply apparatus or the charging pile.

According to a third aspect, this application provides a charging pile. The charging pile is configured to charge an electric vehicle or receive power supplied by an electric vehicle. The charging pile includes a previous-stage circuit and a power supply apparatus. The previous-stage circuit is configured to provide a direct current to the power supply apparatus, or is configured to receive power supplied by the power supply apparatus. The power supply apparatus is configured to: receive a direct current, and charge the electric vehicle, or is configured to: receive power supplied by the electric vehicle, and output a direct current to the previous-stage circuit. The power supply apparatus is described according to the first aspect. Alternatively, the power supply apparatus includes a primary-side three-phase bridge arm circuit, a secondary-side three-phase bridge arm circuit, and the three-phase transformer circuit according to the second aspect.

According to the charging pile provided in this embodiment of this application, a connection relationship or a turns ratio of windings in the three-phase transformer circuit may be switched by using a winding switching switch, to extend an output voltage range of the charging pile, and improve conversion efficiency of the charging pile.

### BRIEF DESCRIPTION OF DRAWINGS

FIG. 1 is a schematic diagram of a charging pile;
FIG. 2 is a schematic circuit diagram of a power supply apparatus;
FIG. 3 is a schematic diagram of a power supply apparatus according to an embodiment of this application;
FIG. 4 is a schematic circuit diagram of a power supply apparatus according to an embodiment of this application;
FIG. 5 is another schematic circuit diagram of a power supply apparatus according to an embodiment of this application;
FIG. 6 is another schematic circuit diagram of a power supply apparatus according to an embodiment of this application;
FIG. 7 is another schematic circuit diagram of a power supply apparatus according to an embodiment of this application;
FIG. 8 is another schematic circuit diagram of a power supply apparatus according to an embodiment of this application; and
FIG. 9 is another schematic circuit diagram of a power supply apparatus according to an embodiment of this application.

### DESCRIPTION OF EMBODIMENTS

Terms used in implementations of this application are merely used to explain specific embodiments of this application, and are not intended to limit this application.

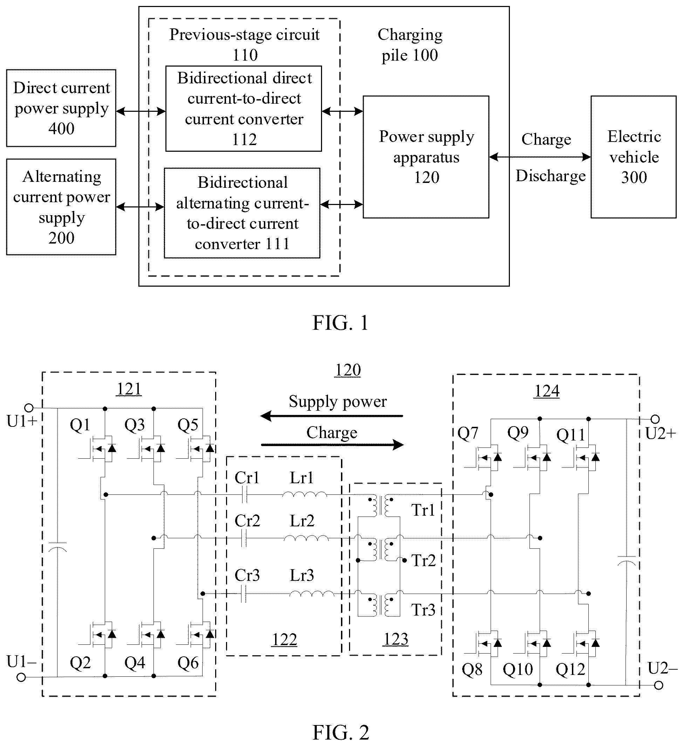

FIG. 1 is a schematic diagram of a charging pile. As shown in FIG. 1, the charging pile 100 includes a previous-stage circuit 110 and a power supply apparatus 120. The charging pile 100 is configured to charge an electric vehicle 300 or receive power supplied by an electric vehicle 300.

For example, the previous-stage circuit 110 is configured to: receive power supplied by an alternating current power supply 200 or a direct current power supply 400, and output a direct current to the power supply apparatus 120. Correspondingly, the power supply apparatus 120 receives power supplied by the previous-stage circuit 110, and charges the electric vehicle 300.

For example, the power supply apparatus 120 receives power supplied by the electric vehicle 300, and outputs a direct current to the previous-stage circuit 110. Correspondingly, the previous-stage circuit 110 is configured to: receive power supplied by the power supply apparatus 120, and supply power to the alternating current power supply 200 or the direct current power supply 400.

For example, the previous-stage circuit 110 includes at least one of a bidirectional alternating current-to-direct current converter 111 or a bidirectional direct current-to-direct current converter 112.

The bidirectional alternating current-to-direct current converter 111 is configured to: receive an alternating current provided by the alternating current power supply 200, and output a direct current to the power supply apparatus 120. Correspondingly, the power supply apparatus 120 receives power supplied by the bidirectional alternating current-to-direct current converter 111, and charges the electric vehicle 300. In addition, the power supply apparatus 120 receives power supplied by the electric vehicle 300, and outputs a direct current to the bidirectional alternating current-to-direct current converter 111. Correspondingly, the bidirectional alternating current-to-direct current converter 111 is configured to: receive power supplied by the power supply apparatus 120, and output an alternating current to the alternating current power supply 200.

The bidirectional direct current-to-direct current converter 112 is configured to: receive a direct current provided by the direct current power supply 400, and output a direct current to the power supply apparatus 120. Correspondingly, the power supply apparatus 120 receives power supplied by the bidirectional direct current-to-direct current converter 112, and charges the electric vehicle 300. In addition, the power supply apparatus 120 receives power supplied by the electric vehicle 300, and outputs a direct current to the bidirectional direct current-to-direct current converter 112. Correspondingly, the bidirectional direct current-to-direct current converter 112 is configured to: receive power supplied by the power supply apparatus 120, and output a direct current to the direct current power supply 400.

FIG. 2 is a schematic circuit diagram of a power supply apparatus. As shown in FIG. 2, the power supply apparatus 120 includes a first bridge arm circuit 121, a three-phase resonant circuit 122, a three-phase transformer 123, and a second bridge arm circuit 124. It may be understood that the first bridge arm circuit 121, the three-phase resonant circuit 122, the three-phase transformer 123, and the second bridge arm circuit 124 form a three-phase resonant converter circuit.

When a charging pile 100 charges an electric vehicle 300, the first bridge arm circuit 121 runs in an inverter mode, and provides a three-phase alternating current to the three-phase transformer 123 through the three-phase resonant circuit 122, and the second bridge arm circuit 124 receives a three-phase alternating current provided by the three-phase transformer 123, and runs in a rectifier mode to output a direct current. Correspondingly, the power supply apparatus 120 may output a direct current to charge the electric vehicle 300.

It may be understood that voltage ranges of charging voltages required by a plurality of types of electric vehicles 300 are different. Therefore, the charging pile 100 needs to provide a wide range of output voltages to meet voltage requirements of the plurality of types of electric vehicles 300. Although output voltage ranges of the power supply apparatus 120 and the charging pile 100 may be adjusted by adjusting a switching frequency when the first bridge arm circuit 121 runs in the inverter mode, conversion efficiency of the power supply apparatus 120 and the charging pile 100 is reduced.

When the charging pile 100 receives power supplied by the electric vehicle 300, the second bridge arm circuit 124 runs in an inverter mode, and provides a three-phase alternating current to the three-phase transformer 123, the three-phase transformer 123 provides a three-phase alternating current to the first bridge arm circuit 121 through the three-phase resonant circuit 122, and the first bridge arm circuit 121 runs in a rectifier mode to output a direct current. Correspondingly, the power supply apparatus 120 outputs a direct current to the previous-stage circuit 110, and the previous-stage circuit 110 outputs an alternating current or a direct current.

However, when the charging pile 100 receives the power supplied by the electric vehicle 300, a ratio of a primary-side voltage to a secondary-side voltage of the three-phase transformer 123 in the power supply apparatus 120 is fixed. When a power supply voltage of the electric vehicle 300 is low, an output voltage of the charging pile 100 is low, and a requirement of the charging pile 100 for supplying power to an alternating current power supply 200 or a direct current power supply 400 cannot be met.

To resolve the foregoing problem, embodiments of the present invention provide a power supply apparatus, a three-phase transformer circuit of a power supply apparatus, and a charging pile. A connection relationship or a turns ratio of windings in the three-phase transformer circuit may be switched by using a winding switching switch, to extend an output voltage range of the power supply apparatus or the charging pile, and improve conversion efficiency of the power supply apparatus or the charging pile.

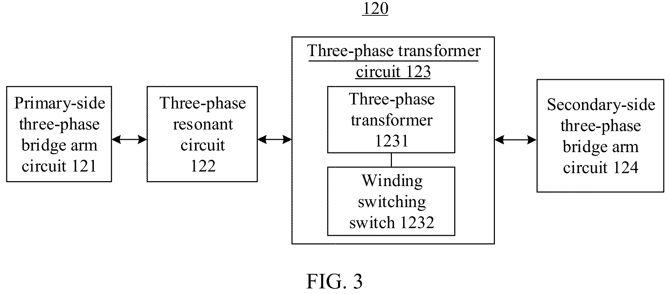

FIG. 3 is a schematic diagram of a power supply apparatus according to an embodiment of this application. As shown in FIG. 3, the power supply apparatus 120 in this embodiment of this application includes a primary-side three-phase bridge arm circuit 121, a three-phase resonant circuit 122, a three-phase transformer circuit 123, and a secondary-side three-phase bridge arm circuit 124.

In this embodiment of this application, the primary-side three-phase bridge arm circuit 121 is configured to receive a direct current provided by a previous-stage circuit 110, and the primary-side three-phase bridge arm circuit 121 runs in an inverter mode. The primary-side three-phase bridge arm circuit 121 outputs a three-phase alternating current to the three-phase transformer circuit 123 through the three-phase resonant circuit 122, and the secondary-side three-phase bridge arm circuit 124 receives a three-phase alternating current provided by the three-phase transformer circuit 123, and runs in a rectifier mode to output a direct current. Correspondingly, the power supply apparatus 120 may output a direct current, and a charging pile 100 charges an electric vehicle 300.

In this embodiment of this application, the secondary-side three-phase bridge arm circuit 124 receives power supplied by the electric vehicle 300, and the secondary-side three-phase bridge arm circuit 124 runs in an inverter mode to output a three-phase alternating current to the three-phase transformer circuit 123. The primary-side three-phase bridge arm circuit 121 is configured to receive, through the three-phase resonant circuit 122, the three-phase alternating current provided by the three-phase transformer circuit 123, and the primary-side three-phase bridge arm circuit 121 runs in a rectifier mode to output a direct current to the previous-stage circuit 110. Correspondingly, the power supply apparatus 120 receives power supplied by the electric vehicle 300, and the charging pile 100 receives power supplied by the electric vehicle 300, and supplies power to an alternating current power supply 200 or a direct current power supply 400.

The three-phase transformer circuit 123 provided in this embodiment of this application includes a three-phase transformer 1231 and a winding switching switch module 1232. A primary-side winding in the three-phase transformer 1231 is configured to be connected to the primary-side three-phase bridge arm circuit 121 through the three-phase resonant circuit 122, and a secondary-side winding in the three-phase transformer 1231 is configured to be connected to the secondary-side three-phase bridge arm circuit 124.

In this embodiment of this application, the winding switching switch module 1232 includes at least one of a winding connection switching switch group or a winding turn number switching switch group. The winding connection switching switch group is configured to switch a connection manner of three primary-side windings or a connection manner of three secondary-side windings. The winding turn number switching switch group is configured to switch turn numbers of the three primary-side windings or turn numbers of the three secondary-side windings.

In this embodiment of this application, the winding connection switching switch group may include at least one of a primary-side winding connection switching switch group or a secondary-side winding connection switching switch group, and the winding turn number switching switch group may include at least one of a primary-side winding turn number switching switch group or a secondary-side winding turn number switching switch group.

In an embodiment, the winding connection switching switch group is configured to switch the connection manner of the three primary-side windings or the connection manner of the three secondary-side windings, and the connection manner of the three primary-side windings or the connection manner of the three secondary-side windings includes a sequential connection or a one-end interconnection.

Specifically, the three primary-side windings are sequentially connected, and the winding connection switching switch group is configured to switch the connection manner of the three primary-side windings. Alternatively, one end of each of the three primary-side windings is connected to one end of each of the other two of the three primary-side windings, and the winding connection switching switch group is configured to switch the connection manner of the three primary-side windings.

Specifically, the three secondary-side windings are sequentially connected, and the winding connection switching switch group is configured to switch the connection manner of the three secondary-side windings. Alternatively, one end of each of the three secondary-side windings is connected to one end of each of the other two of the three secondary-side windings, and the winding connection switching switch group is configured to switch the connection manner of the three secondary-side windings.

In an embodiment, the winding turn number switching switch group is configured to switch the turn numbers of the three primary-side windings or the turn numbers of the three secondary-side windings, and each of the three primary-side windings or the three secondary-side windings includes a tap. Specifically, each of the three primary-side windings includes a tap, and the winding turn number switching switch group is configured to switch the turn numbers of the three primary-side windings. Alternatively, each of the three secondary-side windings includes a tap, and the winding connection switching switch group is configured to switch the turn numbers of the three secondary-side windings.

In this embodiment of this application, the winding switching switch module 1232 is configured to switch a turns ratio of the three-phase transformer 1231 based on a voltage at two ends of the primary-side three-phase bridge arm circuit 121 or a voltage at two ends of the secondary-side three-phase bridge arm circuit 124, to extend an output voltage range of the power supply apparatus or the charging pile, and improve conversion efficiency of the power supply apparatus or the charging pile.

The winding switching switch module 1232 in the three-phase transformer circuit 123 provided in this embodiment of this application may switch a connection manner or turn numbers of the primary-side windings or the secondary-side windings in the three-phase transformer 1231, to switch a ratio of a primary-side voltage to a secondary-side voltage of the three-phase transformer 1231, extend the output voltage range of the power supply apparatus or the charging pile, and improve the conversion efficiency of the power supply apparatus or the charging pile.

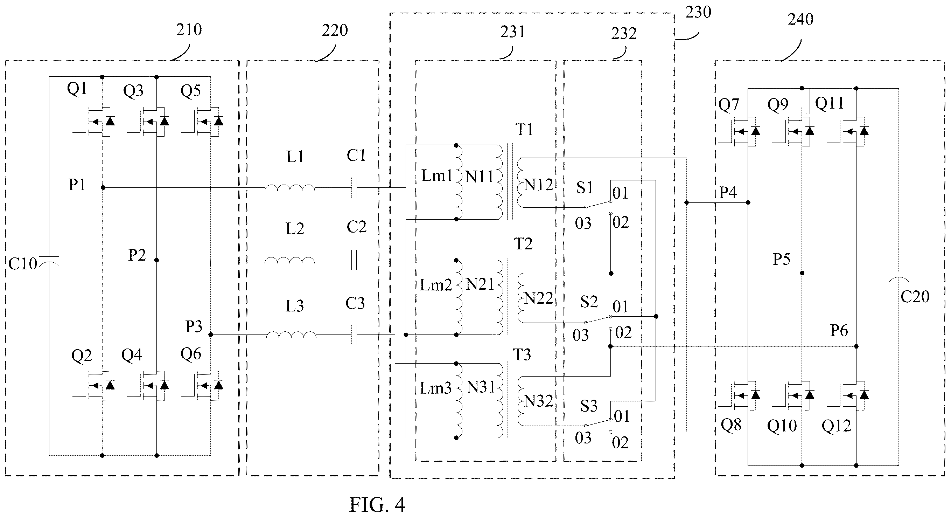

FIG. 4 is a schematic circuit diagram of a power supply apparatus according to an embodiment of this application. As shown in FIG. 4, the power supply apparatus 120 includes a three-phase transformer circuit 230 . The three-phase transformer circuit 230 provided in this embodiment of this application includes a three-phase transformer 231 and a winding switching switch module 232.

For example, the three-phase transformer 231 includes three primary-side windings (N11, N21, and N31) and three secondary-side windings (N12, N22, and N32). The three primary-side windings (N11, N21, and N31) and the three secondary-side windings (N12, N22, and N32) respectively transmit a three-phase alternating current through three magnetic core couplings (T1, T2, and T3). Each of the three primary-side windings (N11, N21, and N31) is configured to be connected to a primary-side three-phase bridge arm circuit 210 through a three-phase resonant circuit 220, and each of the three secondary-side windings (N12, N22, and N32) is configured to be connected to a secondary-side three-phase bridge arm circuit 240.

Specifically, the primary-side three-phase bridge arm circuit 210 includes a capacitor C10 and three bridge arms connected in parallel. Each bridge arm includes two switching transistors. One end of one switching transistor is connected to the other end of the other switching transistor, a connection point between the two switching transistors is used as a bridge arm midpoint, and the other end of the one switching transistor and one end of the other switching transistor are respectively used as two ends of the bridge arm. Two ends of each of the three bridge arms are connected to two ends of each of the other two of the three bridge arms to serve as two ends of the primary-side three-phase bridge arm circuit 210, and two ends of the capacitor C10 are respectively connected to the two ends of the primary-side three-phase bridge arm circuit 210.

For example, the three bridge arms connected in parallel in the primary-side three-phase bridge arm circuit 210 are a first bridge arm, a second bridge arm, and a third bridge arm. The first bridge arm includes a switching transistor Q1 and a switching transistor Q2. One end of the switching transistor Q1 is connected to the other end of the switching transistor Q2, a connection point between the switching transistor Q1 and the switching transistor Q2 is used as a bridge arm midpoint P1 of the first bridge arm, and the other end of the switching transistor Q1 and one end of the switching transistor Q2 are respectively used as two ends of the first bridge arm. The second bridge arm includes a switching transistor Q3 and a switching transistor Q4. One end of the switching transistor Q3 is connected to the other end of the switching transistor Q4, a connection point between the switching transistor Q3 and the switching transistor Q4 is used as a bridge arm midpoint P2 of the second bridge arm, and the other end of the switching transistor Q3 and one end of the switching transistor Q4 are respectively used as two ends of the second bridge arm. The third bridge arm includes a switching transistor Q5 and a switching transistor Q6. One end of the switching transistor Q5 is connected to the other end of the switching transistor Q6, a connection point between the switching transistor Q5 and the switching transistor Q6 is used as a bridge arm midpoint P3 of the third bridge arm, and the other end of the switching transistor Q5 and one end of the switching transistor Q6 are respectively used as two ends of the third bridge arm.

Specifically, the secondary-side three-phase bridge arm circuit 240 includes a capacitor C20 and three bridge arms connected in parallel. Each bridge arm includes two switching transistors. One end of one switching transistor is connected to the other end of the other switching transistor, a connection point between the two switching transistors is used as a bridge arm midpoint of the bridge arm, and the other end of the one switching transistor and one end of the other switching transistor are respectively used as two ends of the bridge arm. Two ends of each of the three bridge arms are connected to two ends of each of the other two of the three bridge arms to serve as two ends of the secondary-side three-phase bridge arm circuit 240, and two ends of the capacitor C20 are respectively connected to the two ends of the secondary-side three-phase bridge arm circuit 240.

For example, the three bridge arms connected in parallel in the secondary-side three-phase bridge arm circuit 240 are a fourth bridge arm, a fifth bridge arm, and a sixth bridge arm. The fourth bridge arm includes a switching transistor Q7 and a switching transistor Q8. One end of the switching transistor Q7 is connected to the other end of the switching transistor Q8, a connection point between the switching transistor Q7 and the switching transistor Q8 is used as a bridge arm midpoint P4 of the fourth bridge arm, and the other end of the switching transistor Q7 and one end of the switching transistor Q8 are respectively used as two ends of the fourth bridge arm. The fifth bridge arm includes a switching transistor Q9 and a switching transistor Q10. One end of the switching transistor Q9 is connected to the other end of the switching transistor Q10, a connection point between the switching transistor Q9 and the switching transistor Q10 is used as a bridge arm midpoint P5 of the fifth bridge arm, and the other end of the switching transistor Q9 and one end of the switching transistor Q10 are respectively used as two ends of the fifth bridge arm. The sixth bridge arm includes a switching transistor Q11 and a switching transistor Q12. One end of the switching transistor Q11 is connected to the other end of the switching transistor Q12, a connection point between the switching transistor Q11 and the switching transistor Q12 is used as a bridge arm midpoint P6 of the sixth bridge arm, and the other end of the switching transistor Q11 and one end of the switching transistor Q12 are respectively used as two ends of the sixth bridge arm.

In this embodiment of this application, one end of each of the three primary-side windings (N11, N21, and N31) in the three-phase transformer 231 is configured to be connected to each of the three bridge arm midpoints (P1, P2, and P3) of the primary-side three-phase bridge arm circuit 210 through the three-phase resonant circuit 220.

In an embodiment, two ends of each of the three primary-side windings (N11, N21, and N31) in the three-phase transformer 231 are respectively connected to two ends of each of three inductors (Lm1, Lm2, and Lm3). For example, two ends of the primary-side winding N11 are respectively connected to two ends of the inductor Lm1, two ends of the primary-side winding N21 are respectively connected to two ends of the inductor Lm2, and two ends of the primary-side winding N31 are respectively connected to two ends of the inductor Lm3.

In this embodiment of this application, each phase of resonant circuit in the three-phase resonant circuit 220 includes an inductor and a capacitor that are connected in series. For example, the three-phase resonant circuit 220 includes a first-phase resonant circuit, a second-phase resonant circuit, and a third-phase resonant circuit. The first-phase resonant circuit includes an inductor L1 and a capacitor C1 that are connected in series. The second-phase resonant circuit includes an inductor L2 and a capacitor C2 that are connected in series. The third-phase resonant circuit includes an inductor L3 and a capacitor C3 that are connected in series.

In this embodiment of this application, one end of each of the three secondary-side windings (N12, N22, and N32) is configured to be connected to each of the three bridge arm midpoints (P4, P5, and P6) of the secondary-side three-phase bridge arm circuit 240. Specifically, one end of the secondary-side winding N12 is configured to be connected to the bridge arm midpoint P4 of the secondary-side three-phase bridge arm circuit 240, one end of the secondary-side winding N22 is configured to be connected to the bridge arm midpoint P5 of the secondary-side three-phase bridge arm circuit 240, and one end of the secondary-side winding N32 is configured to be connected to the bridge arm midpoint P6 of the secondary-side three-phase bridge arm circuit 240.

In this embodiment of this application, the winding connection switching switch group includes three winding connection switching switches. Each winding connection switching switch includes a fixed end and two switching ends. The fixed end of each of the three winding connection switching switches is configured to be connected to the other end of each of the three primary-side windings or the other end of each of the three secondary-side windings. One switching end of each of the three winding connection switching switches is configured to be connected to one switching end of each of the other two of the three winding connection switching switches, to form a common end of the three primary-side windings or a common end of the three secondary-side windings, and the other switching end of each of the three winding connection switching switches is configured to be connected to the one end of each of the three primary-side windings or the one end of each of the three secondary-side windings.

In this embodiment of this application, a winding connection switching switch group configured to switch a connection relationship of the three secondary-side windings is also referred to as a secondary-side winding connection switching switch group.

In an embodiment, the other end of each of the three primary-side windings (N11, N21, and N31) in the three-phase transformer 231 shown in FIG. 4 is connected to the other end of each of the other two of the three primary-side windings. The winding switching switch module 232 includes a winding connection switching switch group. The winding connection switching switch group is configured to switch the connection relationship of the three secondary-side windings (N12, N22, and N32). In this embodiment of this application, the winding connection switching switch group configured to switch the connection relationship of the three secondary-side windings is also referred to as a secondary-side winding connection switching switch group.

For example, the winding connection switching switch group includes three winding connection switching switches (S1, S2, and S3). Each winding connection switching switch (S1, S2, and S3) includes two switching ends (01 and 02) and a fixed end 03. Each of a fixed end 03 of the winding connection switching switch S1, a fixed end 03 of the winding connection switching switch S2, and a fixed end 03 of the winding connection switching switch S3 is configured to be connected to the other end of each of the three secondary-side windings (N12, N22, and N32). A switching end 01 of the winding connection switching switch S1, a switching end 01 of the winding connection switching switch S2, and a switching end 01 of the winding connection switching switch S3 are configured to be connected, to form the common end of the three secondary-side windings (N12, N22, and N32). A switching end 02 of the winding connection switching switch S1 is configured to be connected to one end of the secondary-side winding N22. A switching end 02 of the winding connection switching switch S2 is configured to be connected to one end of the secondary-side winding N32. A switching end 02 of the winding connection switching switch S3 is configured to be connected to one end of the secondary-side winding N12.

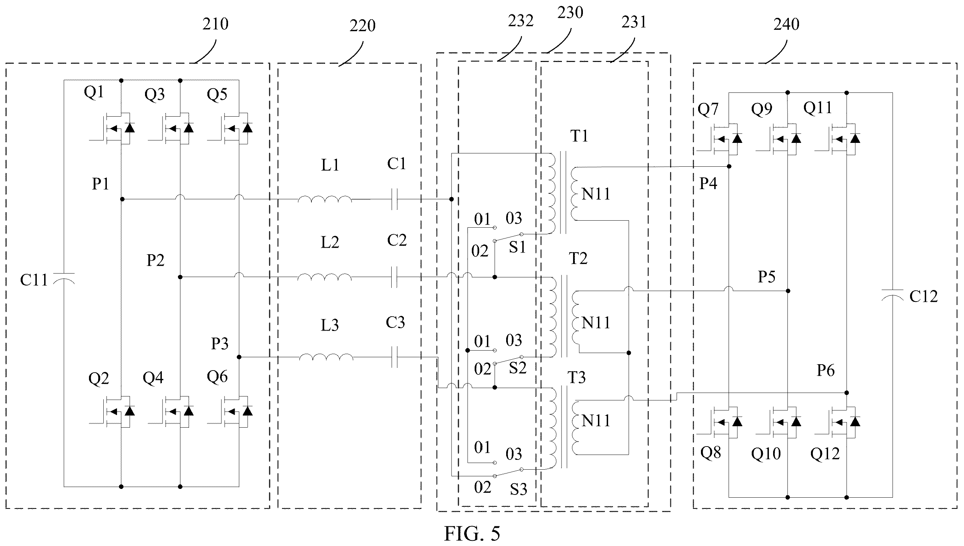

FIG. 5 is another schematic diagram of a power supply apparatus according to an embodiment of this application. A primary-side three-phase bridge arm circuit 210, a three-phase resonant circuit 220, and a secondary-side three-phase bridge arm circuit 240 shown in FIG. 5 are the same as those shown in FIG. 4. Details are not described herein.

The other end of each of three secondary-side windings (N12, N22, and N32) in a three-phase transformer 231 shown in FIG. 5 is connected to the other end of each of the other two of the three secondary-side windings. A winding switching switch module 232 includes a winding connection switching switch group. The winding connection switching switch group is configured to switch a connection relationship of three primary-side windings (N11, N21, and N31). In this embodiment of this application, the winding connection switching switch group configured to switch the connection relationship of the three primary-side windings is also referred to as a primary-side winding connection switching switch group.

For example, the winding connection switching switch group includes three winding connection switching switches (S1, S2, and S3). Each winding connection switching switch (S1, S2, and S3) includes two switching ends (01 and 02) and a fixed end 03. Each of a fixed end 03 of the winding connection switching switch S1, a fixed end 03 of the winding connection switching switch S2, and a fixed end 03 of the winding connection switching switch S3 is configured to be connected to the other end of each of the three primary-side windings (N11, N21, and N31). A switching end 01 of the winding connection switching switch S1, a switching end 01 of the winding connection switching switch S2, and a switching end 01 of the winding connection switching switch S3 are configured to be connected, to form a common end of the three primary-side windings (N11, N21, and N31). A switching end 02 of the winding connection switching switch S1 is configured to be connected to one end of the primary-side winding N21. A switching end 02 of the winding connection switching switch S2 is configured to be connected to one end of the primary-side winding N31. A switching end 02 of the winding connection switching switch S3 is configured to be connected to one end of the primary-side winding N11.

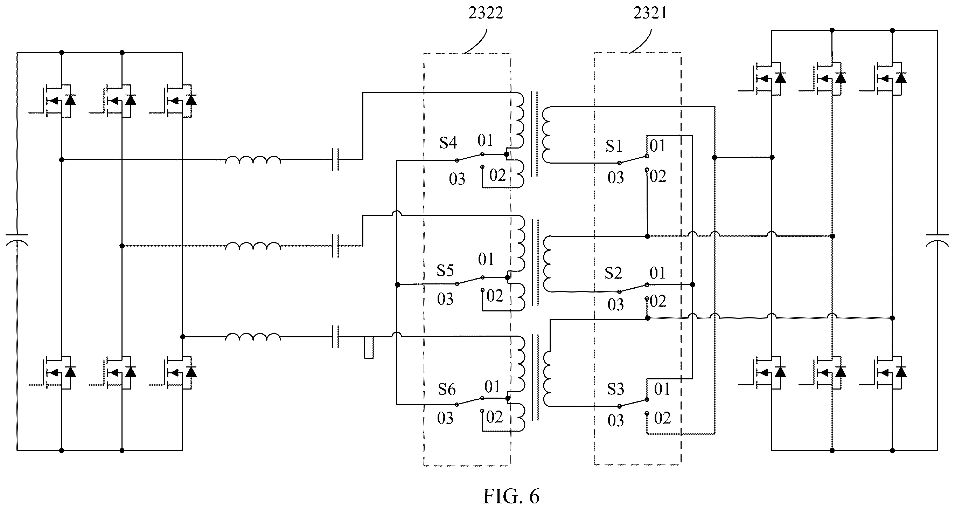

FIG. 6 is another schematic diagram of a power supply apparatus according to an embodiment of this application. A primary-side three-phase bridge arm circuit 210, a three-phase resonant circuit 220, and a secondary-side three-phase bridge arm circuit 240 shown in FIG. 6 are the same as those shown in FIG. 4. Details are not described herein. As shown in FIG. 6, a winding switching switch module 232 includes a winding connection switching switch group 2321 and a winding turn number switching switch group 2322.

The winding connection switching switch group 2321 shown in FIG. 6 is the same as the winding connection switching switch group in the winding switching switch module 232 shown in FIG. 4. Details are not described herein.

As shown in FIG. 6, each of three primary-side windings (N11, N21, and N31) in a three-phase transformer 231 includes two ends and a tap. The winding turn number switching switch group 2322 is configured to switch turn numbers of the three primary-side windings (N11, N21, and N31). In this embodiment of this application, the winding turn number switching switch group configured to switch the turn numbers of the three primary-side windings is also referred to as a primary-side winding turn number switching switch group.

For example, the winding turn number switching switch group 2322 includes three winding turn number switching switches (S4, S5, and S6). Each winding connection switching switch (S4, S5, and S6) includes two switching ends (01 and 02) and a fixed end 03. A fixed end 03 of the winding turn number switching switch S4, a fixed end 03 of the winding turn number switching switch S5, and a fixed end 03 of the winding turn number switching switch S6 are configured to be connected, to form a common end of the three primary-side windings (N11, N21, and N31). Each of a switching end 01 of the winding turn number switching switch S4, a switching end 01 of the winding turn number switching switch S5, and a switching end 01 of the winding connection switching switch S6 is configured to be connected to the tap of each of the three primary-side windings (N11, N21, and N31). Each of a switching end 02 of the winding turn number switching switch S4, a switching end 02 of the winding turn number switching switch S5, and a switching end 02 of the winding connection switching switch S6 is configured to be connected to the other end of each of the three primary-side windings (N11, N21, and N31).

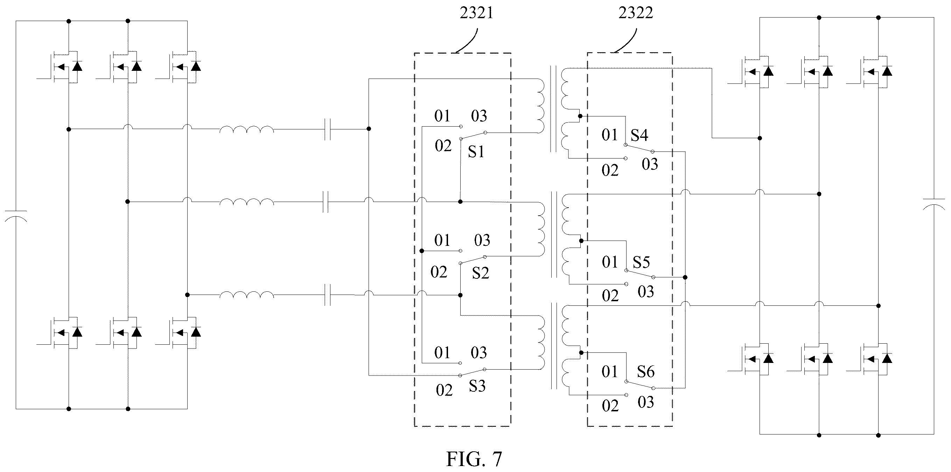

FIG. 7 is another schematic diagram of a power supply apparatus according to an embodiment of this application. A primary-side three-phase bridge arm circuit 210, a three-phase resonant circuit 220, and a secondary-side three-phase bridge arm circuit 240 shown in FIG. 7 are the same as those shown in FIG. 4. Details are not described herein. As shown in FIG. 7, a winding switching switch module 232 includes a winding connection switching switch group 2321 and a winding turn number switching switch group 2322.

The winding connection switching switch group 2321 shown in FIG. 7 is the same as the winding connection switching switch group in the winding switching switch module 232 shown in FIG. 5. Details are not described herein.

As shown in FIG. 7, each of three secondary-side windings (N12, N22, and N32) in a three-phase transformer 231 includes two ends and a tap. The winding turn number switching switch group 2322 is configured to switch turn numbers of the three secondary-side windings (N12, N22, and N32). In this embodiment of this application, the winding turn number switching switch group configured to switch the turn numbers of the three secondary-side windings is also referred to as a secondary-side winding turn number switching switch group.

For example, the winding turn number switching switch group 2322 includes three winding turn number switching switches (S4, S5, and S6). Each winding connection switching switch (S4, S5, and S6) includes two switching ends (01 and 02) and a fixed end 03. A fixed end 03 of the winding turn number switching switch S4, a fixed end 03 of the winding turn number switching switch S5, and a fixed end 03 of the winding turn number switching switch S6 are configured to be connected, to form a common end of the three secondary-side windings (N12, N22, and N32). Each of a switching end 01 of the winding turn number switching switch S4, a switching end 01 of the winding turn number switching switch S5, and a switching end 01 of the winding connection switching switch S6 is configured to be connected to the tap of each of the three secondary-side windings (N12, N22, and N32). Each of a switching end 02 of the winding turn number switching switch S4, a switching end 02 of the winding turn number switching switch S5, and a switching end 02 of the winding connection switching switch S6 is configured to be connected to the other end of each of the three secondary-side windings (N12, N22, and N32).

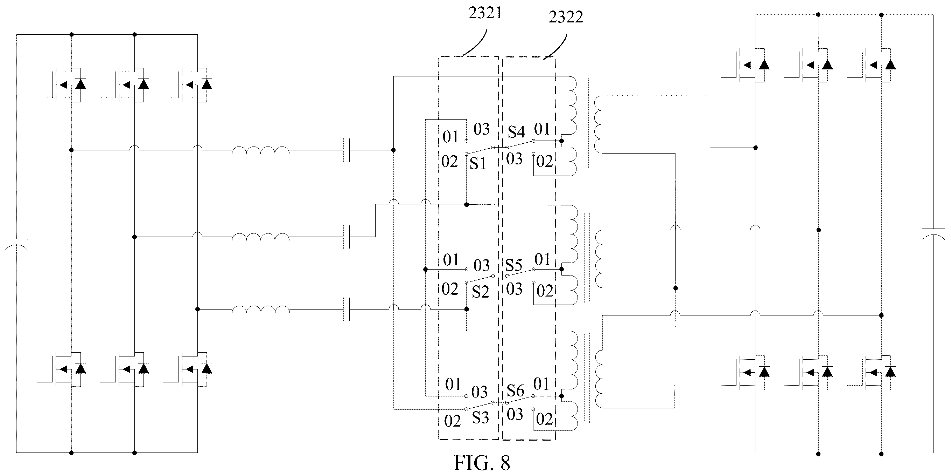

FIG. 8 is another schematic diagram of a power supply apparatus according to an embodiment of this application. A primary-side three-phase bridge arm circuit 210, a three-phase resonant circuit 220, and a secondary-side three-phase bridge arm circuit 240 shown in FIG. 8 are the same as those shown in FIG. 4. Details are not described herein.

As shown in FIG. 8, a winding switching switch module 232 includes a winding connection switching switch group 2321 and a winding turn number switching switch group 2322. Each of three primary-side windings (N11, N21, and N31) in a three-phase transformer 231 includes two ends and a tap. The winding connection switching switch group 2321 is configured to switch a connection relationship of the three primary-side windings (N11, N21, and N31). The winding turn number switching switch group 2322 is configured to switch turn numbers of the three primary-side windings (N11, N21, and N31).

For example, the winding connection switching switch group 2321 includes three winding connection switching switches (S1, S2, and S3), and each winding connection switching switch (S1, S2, and S3) includes two switching ends (01 and 02) and a fixed end 03; and the winding turn number switching switch group 2322 includes three winding turn number switching switches (S4, S5, and S6), and each winding connection switching switch (S4, S5, and S6) includes two switching ends (01 and 02) and a fixed end 03.

Fixed ends 03 of the three winding connection switching switches (S1, S2, and S3) are respectively configured to be connected to fixed ends 03 of the three winding turn number switching switches (S4, S5, and S6). Specifically, the fixed end 03 of the winding connection switching switch S1 is configured to be connected to the fixed end 03 of the winding turn number switching switch S4, the fixed end 03 of the winding connection switching switch S2 is configured to be connected to the fixed end 03 of the winding turn number switching switch S5, and the fixed end 03 of the winding connection switching switch S3 is configured to be connected to the fixed end 03 of the winding turn number switching switch S6.

Switching ends 01 of the three winding connection switching switches (S1, S2, and S3) are configured to be connected, to form a common end of the three primary-side windings (N11, N21, and N31). Specifically, the switching end 01 of the winding connection switching switch S1, the switching end 01 of the winding connection switching switch S2, and the switching end 01 of the winding connection switching switch S3 are configured to be connected, to form the common end of the three primary-side windings (N11, N21, and N31).

A switching end 02 of each of the three winding connection switching switches (S1, S2, and S3) is configured to be connected to one end of each of the three primary-side windings (N11, N21, and N31) in sequence. Specifically, a switching end 02 of the winding connection switching switch S1 is configured to be connected to one end of the primary-side winding N21, a switching end 02 of the winding connection switching switch S2 is configured to be connected to one end of the primary-side winding N31, and a switching end 02 of the winding connection switching switch S3 is configured to be connected to one end of the primary-side winding N11.

A switching end 01 of each of the three winding turn number switching switches (S4, S5, and S6) is configured to be connected to the tap of each of the three primary-side windings (N11, N21, and N31). Specifically, a switching end 01 of the winding turn number switching switch S4 is configured to be connected to a tap of the primary-side winding N11, a switching end 01 of the winding turn number switching switch S5 is configured to be connected to a tap of the primary-side winding N21, and a switching end 01 of the winding turn number switching switch S6 is configured to be connected to a tap of the primary-side winding N31.

A switching end 02 of each of the three winding turn number switching switches (S4, S5, and S6) is configured to be connected to the other end of each of the three primary-side windings (N11, N21, and N31). Specifically, a switching end 02 of the winding turn number switching switch S4 is configured to be connected to the other end of the primary-side winding N11, a switching end 02 of the winding turn number switching switch S5 is configured to be connected to the other end of the primary-side winding N21, and a switching end 02 of the winding turn number switching switch S6 is configured to be connected to the other end of the primary-side winding N31.

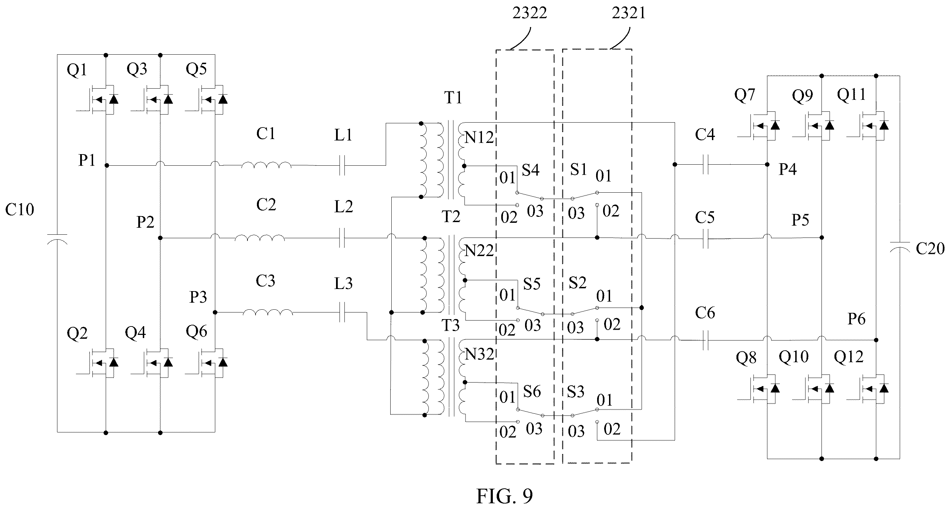

As shown in FIG. 9, a winding switching switch module 232 includes a winding connection switching switch group 2321 and a winding turn number switching switch group 2322. Each of three secondary-side windings (N12, N22, and N32) in a three-phase transformer 231 includes two ends and a tap. The winding connection switching switch group 2321 is configured to switch a connection relationship of the three secondary-side windings (N12, N22, and N32). The winding turn number switching switch group 2322 is configured to switch turn numbers of the three secondary-side windings (N12, N22, and N32).

For example, the winding connection switching switch group 2321 includes three winding connection switching switches (S1, S2, and S3), and each winding connection switching switch (S1, S2, and S3) includes two switching ends (01 and 02) and a fixed end 03; and the winding turn number switching switch group 2322 includes three winding turn number switching switches (S4, S5, and S6), and each winding connection switching switch (S4, S5, and S6) includes two switching ends (01 and 02) and a fixed end 03.

Fixed ends 03 of the three winding connection switching switches (S1, S2, and S3) are respectively configured to be connected to fixed ends 03 of the three winding turn number switching switches (S4, S5, and S6). Specifically, the fixed end 03 of the winding connection switching switch S1 is configured to be connected to the fixed end 03 of the winding turn number switching switch S4, the fixed end 03 of the winding connection switching switch S2 is configured to be connected to the fixed end 03 of the winding turn number switching switch S5, and the fixed end 03 of the winding connection switching switch S3 is configured to be connected to the fixed end 03 of the winding turn number switching switch S6.

Switching ends 01 of the three winding connection switching switches (S1, S2, and S3) are configured to be connected, to form a common end of the three secondary-side windings (N12, N22, and N32). Specifically, the switching end 01 of the winding connection switching switch S1, the switching end 01 of the winding connection switching switch S2, and the switching end 01 of the winding connection switching switch S3 are configured to be connected, to form the common end of the three secondary-side windings (N12, N22, and N32).

A switching end 02 of each of the three winding connection switching switches (S1, S2, and S3) is configured to be connected to one end of each of the three secondary-side windings (N12, N22, and N32) in sequence. Specifically, a switching end 02 of the winding connection switching switch S1 is configured to be connected to one end of the secondary-side winding N22, a switching end 02 of the winding connection switching switch S2 is configured to be connected to one end of the primary-side winding N32, and a switching end 02 of the winding connection switching switch S3 is configured to be connected to one end of the primary-side winding N12.

A switching end 01 of each of the three winding turn number switching switches (S4, S5, and S6) is configured to be connected to the tap of each of the three secondary-side windings (N12, N22, and N32). Specifically, a switching end 01 of the winding turn number switching switch S4 is configured to be connected to a tap of the secondary-side winding N12, a switching end 01 of the winding turn number switching switch S5 is configured to be connected to a tap of the secondary-side winding N22, and a switching end 01 of the winding turn number switching switch S6 is configured to be connected to a tap of the secondary-side winding N32.

A switching end 02 of each of the three winding turn number switching switches (S4, S5, and S6) is configured to be connected to the other end of each of the three secondary-side windings (N12, N22, and N32). Specifically, a switching end 02 of the winding turn number switching switch S4 is configured to be connected to the other end of the secondary-side winding N12, a switching end 02 of the winding turn number switching switch S5 is configured to be connected to the other end of the secondary-side winding N22, and a switching end 02 of the winding turn number switching switch S6 is configured to be connected to the other end of the secondary-side winding N32.

In an embodiment, the one end of each of the three secondary-side windings (N12, N22, and N32) in the three-phase transformer 231 is connected to each of the three bridge arm midpoints (P4, P5, and P6) of the secondary-side three-phase bridge arm circuit 240 through each of three capacitors. Specifically, the one end of the secondary-side winding N12 is connected to the bridge arm midpoint P4 through a capacitor C4, the one end of the secondary-side winding N22 is connected to the bridge arm midpoint P5 through a capacitor C5, and the one end of the secondary-side winding N32 is connected to the bridge arm midpoint P6 through a capacitor C6.

It may be understood that the winding switching switch module 232 in the three-phase transformer circuit 230 provided in this embodiment of this application may alternatively be disposed in both the primary-side winding and the secondary-side winding in the three-phase transformer 231. In this embodiment of this application, the winding switching switch module 232 disposed in the primary-side winding in the three-phase transformer 231 may also be referred to as a primary-side winding switching switch module, and the winding switching switch module 232 disposed in the secondary-side winding in the three-phase transformer 231 may also be referred to as a secondary-side winding switching switch module. For a circuit connection relationship of the primary-side winding switching switch module, refer to FIG. 8. For a circuit connection relationship of the secondary-side winding switching switch module, refer to FIG. 9. Details are not described herein.

The winding switching switch module in the three-phase transformer circuit provided in this embodiment of this application may switch a turns ratio or a connection manner of the three-phase transformer based on a voltage at two ends of the primary-side three-phase bridge arm circuit or a voltage at two ends of the secondary-side three-phase bridge arm circuit.

In an embodiment, the winding switching switch module 232 shown in FIG. 4 includes a secondary-side winding connection switching switch group. The secondary-side winding connection switching switch group is configured to switch the connection relationship of the three secondary-side windings in the three-phase transformer 231 in response to a result of comparing the voltage at the two ends of the secondary-side three-phase bridge arm circuit 240 with at least one preset value.

Specifically, in response to that the voltage at the two ends of the secondary-side three-phase bridge arm circuit 240 is greater than or equal to a first preset voltage value, a fixed end S03 and a switching end S01 of the secondary-side winding connection switching switch group are connected, and the other end of each of the three secondary-side windings in the three-phase transformer 231 is connected to the other end of each of the other two of the three secondary-side windings. That is, a connection manner of the secondary-side windings in the three-phase transformer 231 is a star connection or a Y-shaped connection.

Specifically, in response to that the voltage at the two ends of the secondary-side three-phase bridge arm circuit 240 is less than a first preset voltage value, a fixed end S03 and a switching end S02 of the secondary-side winding connection switching switch group are connected, and the three secondary-side windings in the three-phase transformer 231 are sequentially connected. That is, a connection manner of the secondary-side windings in the three-phase transformer 231 is a delta connection.

It may be understood that when the connection manner of the secondary-side windings in the three-phase transformer 231 is a star connection or a Y-shaped connection, a maximum voltage of the secondary-side winding in the three-phase transformer 231 is two-thirds of the voltage at the two ends of the secondary-side three-phase bridge arm circuit 240; or when the connection manner of the secondary-side windings in the three-phase transformer 231 is a delta connection, a maximum voltage of the secondary-side winding in the three-phase transformer 231 is equal to the voltage at the two ends of the secondary-side three-phase bridge arm circuit 240.

In response to that the voltage at the two ends of the secondary-side three-phase bridge arm circuit 240 is greater than or equal to the first preset voltage value, the fixed end S03 and the switching end S01 of the secondary-side winding connection switching switch group are connected. For example, the first preset voltage value is 700 volts. Correspondingly, a voltage requirement greater than or equal to 700 volts is a high voltage requirement, for example, 700 volts, 800 volts, or even 1000 volts.

Specifically, when the power supply apparatus 120 in the charging pile 100 is configured to charge the electric vehicle 300 with a high voltage requirement, the voltage at the two ends of the secondary-side three-phase bridge arm circuit 240 may be increased to 1.5 times a theoretical voltage value of the secondary-side winding in the three-phase transformer 231. Therefore, the charging pile 100 or the power supply apparatus 120 can meet the high voltage requirement of the electric vehicle 300, so that different types of electric vehicles 300 can be charged.

Specifically, when the power supply apparatus 120 in the charging pile 100 is configured to receive power supplied by the electric vehicle 300 with a high voltage requirement, a voltage of the secondary-side winding in the three-phase transformer 231 may be decreased to two-thirds of the voltage at the two ends of the secondary-side three-phase bridge arm circuit 240. Therefore, the charging pile 100 or the power supply apparatus 120 can meet a requirement that the voltage at the two ends of the primary-side three-phase bridge arm circuit is constant (for example, 650 volts), so that power can be supplied to the alternating current power supply 200 or the direct current power supply by using different types of electric vehicles 300.

In response to that the voltage at the two ends of the secondary-side three-phase bridge arm circuit 240 is less than the first preset voltage value, the fixed end S03 and the switching end S02 of the secondary-side winding connection switching switch group are connected. Correspondingly, a voltage requirement less than 700 volts is a low voltage requirement, for example, 300 volts, 400 volts, or even 500 volts.

Specifically, when the power supply apparatus 120 in the charging pile 100 is configured to charge the electric vehicle 300 with a low voltage requirement or receive power supplied by the electric vehicle 300 with a low voltage requirement, the maximum voltage of the secondary-side winding in the three-phase transformer 231 is equal to the voltage at the two ends of the secondary-side three-phase bridge arm circuit 240. A voltage that is at each of the two ends of the secondary-side three-phase bridge arm circuit 240 and that exists when the secondary-side windings in the three-phase transformer 231 are in a star connection is half of a voltage that is at each of the two ends of the secondary-side three-phase bridge arm circuit 240 and that exists when the secondary-side windings in the three-phase transformer 231 are in a delta connection. Correspondingly, the charging pile 100 or the power supply apparatus 120 can not only charge different types of electric vehicles 300, but also supply power to the alternating current power supply 200 or the direct current power supply by using the different types of electric vehicles 300, without generating an additional energy loss. This helps improve conversion efficiency.

It may be understood that the three-phase transformer circuit 230 provided in this embodiment of this application may switch the connection relationship of the three secondary-side windings based on the voltage at the two ends of the secondary-side three-phase bridge arm circuit. In this way, the power supply apparatus 120 and the charging pile 100 can charge different types of electric vehicles 300, and the power supply apparatus 120 and the charging pile 100 can supply power to different types of alternating current power supplies 200 or direct current power supplies by using the different types of electric vehicles 300, without generating an additional energy loss. This helps improve conversion efficiency.

In an embodiment, the secondary-side winding connection switching switch group is configured to switch the connection relationship of the three secondary-side windings in the three-phase transformer 231 in response to a result of comparing the voltage at the two ends of the primary-side three-phase bridge arm circuit 210 with at least one preset value. For example, the direct current power supply 400 may be an energy storage device. Voltage ranges of various types of energy storage devices are different, and a voltage of the energy storage device changes with power supply or charging. This affects the voltage at the two ends of the primary-side three-phase bridge arm circuit 210. Correspondingly, the secondary-side winding connection switching switch group switches the connection relationship of the three secondary-side windings in the three-phase transformer 231 in response to the voltage at the two ends of the primary-side three-phase bridge arm circuit 210, so that applicability of the power supply apparatus 120 and the charging pile 100 can be improved. For a specific running process, refer to the foregoing content. Details are not described herein.

In an embodiment, the winding switching switch module 232 shown in FIG. 5 includes a primary-side winding connection switching switch group. The primary-side winding connection switching switch group is configured to switch the connection relationship of the three primary-side windings in the three-phase transformer 231 in response to a result of comparing the voltage at the two ends of the secondary-side three-phase bridge arm circuit 240 with at least one preset value.

Specifically, in response to that the voltage at the two ends of the secondary-side three-phase bridge arm circuit 240 is greater than or equal to a first preset voltage value, a fixed end S03 and a switching end S01 of the primary-side winding connection switching switch group are connected, and the other end of each of the three primary-side windings in the three-phase transformer 231 is connected to the other end of each of the other two of the three primary-side windings. That is, a connection manner of the secondary-side windings in the three-phase transformer 231 is a star connection or a Y-shaped connection.

Specifically, in response to that the voltage at the two ends of the secondary-side three-phase bridge arm circuit 240 is less than a first preset voltage value, a fixed end S03 and a switching end S02 of the primary-side winding connection switching switch group are connected, and the three primary-side windings in the three-phase transformer 231 are sequentially connected. That is, a connection manner of the primary-side windings in the three-phase transformer 231 is a delta connection.

It may be understood that when the connection manner of the primary-side windings in the three-phase transformer 231 is a star connection or a Y-shaped connection, a maximum voltage of the primary-side winding in the three-phase transformer 231 is two-thirds of the voltage at the two ends of the primary-side three-phase bridge arm circuit 240; or when the connection manner of the primary-side windings in the three-phase transformer 231 is a delta connection, a maximum voltage of the primary-side winding in the three-phase transformer 231 is equal to the voltage at the two ends of the primary-side three-phase bridge arm circuit 240.

Correspondingly, the primary-side winding connection switching switch group may switch the connection relationship of the three primary-side windings in the three-phase transformer 231 in response to the result of comparing the voltage at the two ends of the secondary-side three-phase bridge arm circuit 240 with the at least one preset value. Details are not described.

It may be understood that the three-phase transformer circuit 230 provided in this embodiment of this application may switch the connection relationship of the three primary-side windings based on the voltage at the two ends of the secondary-side three-phase bridge arm circuit 240. In this way, the power supply apparatus 120 and the charging pile 100 can charge different types of electric vehicles 300, and the power supply apparatus 120 and the charging pile 100 can supply power to the alternating current power supply 200 or the direct current power supply by using the different types of electric vehicles 300, without generating an additional energy loss. This helps improve conversion efficiency.

It may be understood that the primary-side winding connection switching switch group in the winding switching switch module 232 in each of the three-phase transformer circuit, the power supply apparatus, and the charging pile provided in this embodiment of this application may alternatively switch the connection relationship of the three primary-side windings in the three-phase transformer 231 in response to the voltage at the two ends of the primary-side three-phase bridge arm circuit 210. For a specific running process, refer to the foregoing content. Details are not described herein.

It may be understood that the winding switching switch module 232 in each of the three-phase transformer circuit, the power supply apparatus, and the charging pile provided in this embodiment of this application may alternatively include both the primary-side winding connection switching switch group shown in FIG. 4 and the secondary-side winding turn number switching switch group shown in FIG. 5.

In an embodiment, the winding switching switch module 232 shown in FIG. 6 includes a primary-side winding turn number switching switch group. The primary-side winding turn number switching switch group is configured to switch the turn numbers of the three primary-side windings in the three-phase transformer 231 in response to a result of comparing the voltage at the two ends of the secondary-side three-phase bridge arm circuit 240 with at least one preset value, so as to switch a turns ratio of the three-phase transformer 231.

Specifically, in response to that the voltage at the two ends of the secondary-side three-phase bridge arm circuit 240 is greater than or equal to a first preset voltage value, a fixed end S03 and a switching end S02 of the primary-side winding connection switching switch group are connected, and one end of each of the three primary-side windings in the three-phase transformer 231 is connected to one end of each of the other two of the three primary-side windings. That is, the turn numbers of the primary-side windings in the three-phase transformer 231 are increased.

Specifically, in response to that the voltage at the two ends of the secondary-side three-phase bridge arm circuit 240 is less than a first preset voltage value, a fixed end S03 and a switching end S01 of the primary-side winding turn number switching switch group are connected, and taps of the three primary-side windings in the three-phase transformer 231 are connected. That is, the turn numbers of the primary-side windings in the three-phase transformer 231 are decreased.

It may be understood that the primary-side winding turn number switching switch group in the winding switching switch module 232 in each of the three-phase transformer circuit, the power supply apparatus, and the charging pile provided in this embodiment of this application may alternatively switch the turn numbers of the three primary-side windings in the three-phase transformer 231 in response to the voltage at the two ends of the primary-side three-phase bridge arm circuit 210. For a specific running process, refer to the foregoing content. Details are not described herein.

In an embodiment, the winding switching switch module 232 shown in FIG. 7 includes a secondary-side winding turn number switching switch group. The secondary-side winding turn number switching switch group is configured to switch the turn numbers of the three secondary-side windings in the three-phase transformer 231 in response to a result of comparing the voltage at the two ends of the secondary-side three-phase bridge arm circuit 240 with at least one preset value, so as to switch a turns ratio of the three-phase transformer 231.

Specifically, in response to that the voltage at the two ends of the secondary-side three-phase bridge arm circuit 240 is greater than or equal to a first preset voltage value, a fixed end S03 and a switching end S01 of the secondary-side winding turn number switching switch group are connected, and taps of the three secondary-side windings in the three-phase transformer 231 are connected. That is, the turn numbers of the secondary-side windings in the three-phase transformer 231 are decreased.

Specifically, in response to that the voltage at the two ends of the secondary-side three-phase bridge arm circuit 240 is less than a first preset voltage value, a fixed end S03 and a switching end S02 of the secondary-side winding connection switching switch group are connected, and one end of each of the three secondary-side windings in the three-phase transformer 231 is connected to one end of each of the other two of the three secondary-side windings. That is, the turn numbers of the primary-side windings in the three-phase transformer 231 are increased.

It may be understood that the secondary-side winding turn number switching switch group in the winding switching switch module 232 in each of the three-phase transformer circuit, the power supply apparatus, and the charging pile provided in this embodiment of this application may alternatively switch the turn numbers of the three secondary-side windings in the three-phase transformer 231 in response to the voltage at the two ends of the primary-side three-phase bridge arm circuit 210. For a specific running process, refer to the foregoing content. Details are not described herein.

In this embodiment of this application, the winding switching switch module 232 may switch the turns ratio of the three-phase transformer 231 based on the voltage at the two ends of the primary-side three-phase bridge arm circuit 210 or the voltage at the two ends of the secondary-side three-phase bridge arm circuit 240. A change in the turns ratio of the three-phase transformer 231 may change a difference between a voltage of the primary-side winding and a voltage of the secondary-side winding in the three-phase transformer 231, so that the power supply apparatus 120 and the charging pile 100 can be adapted to different types of power supplies (200 or 400) or different types of electric vehicles 300.

Correspondingly, according to the three-phase transformer circuit 230 provided in this embodiment of this application, the power supply apparatus 120 and the charging pile 100 can charge different types of electric vehicles 300, and the power supply apparatus 120 and the charging pile 100 can supply power to the alternating current power supply 200 or the direct current power supply 400 by using the different types of electric vehicles 300, without generating an additional energy loss. This helps improve conversion efficiency.

In an embodiment, the winding switching switch module 232 in each of the three-phase transformer circuit 230, the power supply apparatus 120, and the charging pile 100 may alternatively include both the primary-side winding turn number switching switch group 2322 shown in FIG. 6 and the secondary-side winding turn number switching switch group 2322 shown in FIG. 7. A principle is the same as that in the foregoing embodiment. No enumerations are provided one by one.

In an embodiment, the winding switching switch module 232 in each of the three-phase transformer circuit 230, the power supply apparatus 120, and the charging pile 100 may include both the primary-side winding turn number switching switch group 2322 shown in FIG. 6 and the secondary-side winding connection switching switch group 2321 shown in FIG. 6. A principle is the same as that in the foregoing embodiment. No enumerations are provided one by one.

In an embodiment, the winding switching switch module 232 in each of the three-phase transformer circuit 230, the power supply apparatus 120, and the charging pile 100 may include both the primary-side winding connection switching switch group 2321 shown in FIG. 7 and the secondary-side winding turn number switching switch group 2322 shown in FIG. 7. A principle is the same as that in the foregoing embodiment. No enumerations are provided one by one.

In an embodiment, the winding switching switch module 232 shown in FIG. 8 includes a primary-side winding connection switching switch group 2321 and a primary-side winding turn number switching switch group 2322. The primary-side winding connection switching switch group 2321 and the primary-side winding turn number switching switch group 2322 are configured to switch at least one of the connection relationship or the turn numbers of the three primary-side windings in the three-phase transformer 231 in response to a result of comparing at least one of the voltage at the two ends of the primary-side three-phase bridge arm circuit 210 or the voltage at the two ends of the secondary-side three-phase bridge arm circuit 240 with at least one preset value.

Specifically, when the primary-side winding turn number switching switch group 2321 and the primary-side winding turn number switching switch group 2322 perform switching, the following four different topology combinations may be generated to implement separate or combined switching of the connection relationship or the turn numbers of the three primary-side windings, so as to meet a wide-range output voltage requirement of the power supply apparatus 120 or a charging pile 100:

Topology combination (1): In response to that the voltage at the two ends of the primary-side three-phase bridge arm circuit 240 is greater than or equal to a third preset voltage value, each of three primary-side winding connection switching switches S1, S2, and S3 is switched to an end 01, and each of three primary-side winding turn number switching switches S4, S5, and S6 is switched to an end 02. Correspondingly, the primary-side windings in the three-phase transformer 231 are in a star connection, secondary-side windings in the three-phase transformer 231 are in a star connection, and the turn numbers of the primary-side windings are large. For example, the third preset voltage value is 700 volts. It may be understood that when the voltage at the two ends of the primary-side three-phase bridge arm circuit 240 is greater than or equal to the third preset voltage value, an alternating current power supply 200 or a direct current power supply 400 has a high voltage. For example, the voltage is greater than 700 volts. For example, the direct current power supply 400 is an energy storage device, and the energy storage device has a high voltage when starting to supply power, or the energy storage device has a high voltage after being charged for a long time.

Topology combination (2): In response to that the voltage at the two ends of the primary-side three-phase bridge arm circuit 240 is greater than or equal to a fourth preset voltage value and is less than a third preset voltage value, each of three primary-side winding connection switching switches S1, S2, and S3 is switched to an end 01, and each of three primary-side winding turn number switching switches S4, S5, and S6 is switched to an end 01. Correspondingly, the primary-side windings in the three-phase transformer 231 are in a star connection, secondary-side windings in the three-phase transformer 231 are in a star connection, and the turn numbers of the primary-side windings are small. For example, the fourth preset voltage value is 500 volts. It may be understood that when the voltage at the two ends of the primary-side three-phase bridge arm circuit 240 is greater than or equal to the fourth preset voltage value and is less than the third preset voltage value, an alternating current power supply 200 or a direct current power supply 400 has a medium voltage. For example, the voltage ranges from 500 volts to 700 volts. For example, the direct current power supply 400 is an energy storage device, and the energy storage device has a decreased voltage after supplying power for a period of time, or the energy storage device has an increased voltage after being charged for a longer time.

Topology combination (3): In response to that the voltage at the two ends of the primary-side three-phase bridge arm circuit 240 is greater than or equal to a fifth preset voltage value and is less than a fourth preset voltage value, each of three primary-side winding connection switching switches S1, S2, and S3 is switched to an end 02, and each of three primary-side winding turn number switching switches S4, S5, and S6 is switched to an end 02. Correspondingly, the primary-side windings in the three-phase transformer 231 are in a delta connection, secondary-side windings in the three-phase transformer 231 are in a star connection, and the turn numbers of the primary-side windings are large. For example, the fifth preset voltage value is 300 volts. It may be understood that when the voltage at the two ends of the primary-side three-phase bridge arm circuit 240 is greater than or equal to the fourth preset voltage value and is less than the third preset voltage value, an alternating current power supply 200 or a direct current power supply 400 has a low voltage. For example, the voltage ranges from 300 volts to 500 volts. For example, the direct current power supply 400 is an energy storage device, and the energy storage device has a further decreased voltage after supplying power for a longer time, or the energy storage device has an increased voltage after being charged for a period of time.

Topology combination (4): In response to that the voltage at the two ends of the primary-side three-phase bridge arm circuit 240 is less than a fifth preset voltage value, each of three primary-side winding connection switching switches S1, S2, and S3 is switched to an end 02, and each of three primary-side winding turn number switching switches S4, S5, and S6 is switched to an end 01. Correspondingly, the primary-side windings in the three-phase transformer 231 are in a delta connection, secondary-side windings in the three-phase transformer 231 are in a star connection, and the turn numbers of the primary-side windings are small. It may be understood that when the voltage at the two ends of the primary-side three-phase bridge arm circuit 240 is less than the fifth preset voltage value, an alternating current power supply 200 or a direct current power supply 400 has an excessively low voltage. For example, the voltage is less than 300 volts. For example, the direct current power supply 400 is an energy storage device, and the energy storage device has an excessively low voltage after supplying power for a long time, or the energy storage device has an excessively low voltage when being just charged.

It may be understood that the primary-side winding connection switching switch group 2321 and the primary-side winding turn number switching switch group 2322 in the winding switching switch module 232 in each of the three-phase transformer circuit 230, the power supply apparatus 120, and the charging pile 100 provided in this embodiment of this application may alternatively switch the turn numbers and the connection relationship of the three primary-side windings in the three-phase transformer 231 in response to the voltage at the two ends of the secondary-side three-phase bridge arm circuit 240. For a specific running process, refer to the foregoing content. Details are not described herein.

In an embodiment, the winding switching switch module 232 shown in FIG. 9 includes a secondary-side winding connection switching switch group 2321 and a secondary-side winding turn number switching switch group 2322. The secondary-side winding connection switching switch group 2321 and the secondary-side winding turn number switching switch group 2322 are configured to switch at least one of the connection relationship or the turn numbers of the three secondary-side windings in the three-phase transformer 231 in response to a result of comparing at least one of the voltage at the two ends of the primary-side three-phase bridge arm circuit 240 or the voltage at the two ends of the secondary-side three-phase bridge arm circuit 240 with at least one preset value.

Specifically, when the secondary-side winding turn number switching switch group 2321 and the secondary-side winding turn number switching switch group 2322 perform switching, the following four different topology combinations may be generated to implement separate or combined switching of the connection relationship or the turn numbers of the three secondary-side windings, so as to meet a wide-range output voltage requirement of the power supply apparatus 120 or a charging pile 100:

Topology combination (1): In response to that the voltage at the two ends of the secondary-side three-phase bridge arm circuit 240 is greater than or equal to a third preset voltage value, each of three secondary-side winding connection switching switches S1, S2, and S3 is switched to an end 01, and each of three secondary-side winding turn number switching switches S4, S5, and S6 is switched to an end 02. Correspondingly, the secondary-side windings in the three-phase transformer 231 are in a star connection, primary-side windings in the three-phase transformer 231 are in a star connection, and the turn numbers of the secondary-side windings are large. For example, the third preset voltage value is 700 volts. It may be understood that when the voltage at the two ends of the secondary-side three-phase bridge arm circuit 240 is greater than or equal to the third preset voltage value, an electric vehicle has a high voltage. For example, the voltage is greater than 700 volts. For example, the electric vehicle 300 has a high voltage after being fully charged, or the electric vehicle 300 has a high voltage when starting to supply power.

Topology combination (2): In response to that the voltage at the two ends of the secondary-side three-phase bridge arm circuit 240 is greater than or equal to a fourth preset voltage value and is less than a third preset voltage value, each of three secondary-side winding connection switching switches S1, S2, and S3 is switched to an end 01, and each of three secondary-side winding turn number switching switches S4, S5, and S6 is switched to an end 01. Correspondingly, the secondary-side windings in the three-phase transformer 231 are in a star connection, primary-side windings in the three-phase transformer 231 are in a star connection, and the turn numbers of the secondary-side windings are small. For example, the fourth preset voltage value is 500 volts. It may be understood that when the voltage at the two ends of the secondary-side three-phase bridge arm circuit 240 is greater than or equal to the fourth preset voltage value and is less than the third preset voltage value, an electric vehicle has a high voltage. For example, the voltage ranges from 500 volts to 700 volts. For example, the electric vehicle 300 has a high voltage after being charged for a long time, or the electric vehicle 300 has a decreased voltage after starting to supply power.

Topology combination (3): In response to that the voltage at the two ends of the secondary-side three-phase bridge arm circuit 240 is greater than or equal to a fifth preset voltage value and is less than a fourth preset voltage value, each of three secondary-side winding connection switching switches S1, S2, and S3 is switched to an end 02, and each of three secondary-side winding turn number switching switches S4, S5, and S6 is switched to an end 02. Correspondingly, the secondary-side windings in the three-phase transformer 231 are in a delta connection, primary-side windings in the three-phase transformer 231 are in a star connection, and the turn numbers of the secondary-side windings are large. For example, the fifth preset voltage value is 300 volts. It may be understood that when the voltage at the two ends of the secondary-side three-phase bridge arm circuit 240 is greater than or equal to the fourth preset voltage value and is less than the third preset voltage value, an electric vehicle has a high voltage. For example, the voltage ranges from 300 volts to 500 volts. For example, the electric vehicle 300 has an increased voltage after starting to be charged for a period of time, or the electric vehicle 300 has a decreased voltage after supplying power for a period of time.

Topology combination (4): In response to that the voltage at the two ends of the secondary-side three-phase bridge arm circuit 240 is less than a fifth preset voltage value, each of three secondary-side winding connection switching switches S1, S2, and S3 is switched to an end 02, and each of three secondary-side winding turn number switching switches S4, S5, and S6 is switched to an end 01. Correspondingly, the secondary-side windings in the three-phase transformer 231 are in a delta connection, primary-side windings in the three-phase transformer 231 are in a star connection, and the turn numbers of the secondary-side windings are small. It may be understood that when the voltage at the two ends of the secondary-side three-phase bridge arm circuit 240 is less than the fifth preset voltage value, an electric vehicle has an excessively low voltage. For example, the voltage is less than 300 volts. For example, the electric vehicle 300 has a low voltage when starting to be charged, or the electric vehicle 300 has a further decreased voltage after supplying power for a long time.

It may be understood that the secondary-side winding turn number switching switch group 2322 and the secondary-side winding connection switching switch group 2321 in the winding switching switch module 232 in each of the three-phase transformer circuit 230, the power supply apparatus 120, and the charging pile 100 provided in this embodiment of this application may alternatively switch the turn numbers and the connection relationship of the three secondary-side windings in the three-phase transformer 231 in response to the voltage at the two ends of the primary-side three-phase bridge arm circuit 210. For a specific running process, refer to the foregoing content. Details are not described herein.

It may be understood that the winding switching switch module 232 in each of the three-phase transformer circuit 230, the power supply apparatus 120, and the charging pile 100 provided in this embodiment of this application may alternatively include all of the primary-side winding connection switching switch group 2321 and the primary-side winding turn number switching switch group 2322 shown in FIG. 8, and the secondary-side winding connection switching switch group 2321 and the secondary-side winding turn number switching switch group 2322 shown in FIG. 9. A principle is the same as that in the foregoing embodiment. No enumerations are provided one by one.

It may be understood that the winding switching switch module 232 in each of the three-phase transformer circuit, the power supply apparatus, and the charging pile provided in this embodiment of this application may alternatively include all of the primary-side winding switching switch module 232 shown in FIG. 5, and the secondary-side winding connection switching switch group 2321 and the secondary-side winding turn number switching switch group 2322 shown in FIG. 9. A principle is the same as that in the foregoing embodiment. No enumerations are provided one by one.

It may be understood that the winding switching switch module 232 in each of the three-phase transformer circuit, the power supply apparatus, and the charging pile provided in this embodiment of this application may alternatively include all of the primary-side winding connection switching module 2321 shown in FIG. 7, and the secondary-side winding connection switching switch group 2321 and the secondary-side winding turn number switching switch group 2322 shown in FIG. 9. A principle is the same as that in the foregoing embodiment. No enumerations are provided one by one.

It may be understood that the winding switching switch module 232 in each of the three-phase transformer circuit 230, the power supply apparatus 120, and the charging pile 100 provided in this embodiment of this application may alternatively include all of the primary-side winding connection switching switch group 2321 and the primary-side winding turn number switching switch group 2322 shown in FIG. 8, and the secondary-side winding turn number switching module 2322 shown in FIG. 7. A principle is the same as that in the foregoing embodiment. No enumerations are provided one by one.

It may be understood that the winding switching switch module 232 in each of the three-phase transformer circuit 230, the power supply apparatus 120, and the charging pile 100 provided in this embodiment of this application may alternatively include all of the primary-side winding connection switching switch group 2321 and the primary-side winding turn number switching switch group 2322 shown in FIG. 8, and the secondary-side winding connection switching module 2321 shown in FIG. 6. A principle is the same as that in the foregoing embodiment. No enumerations are provided one by one.

It may be understood that some or all of the steps or operations in the foregoing embodiments are merely examples. In embodiments of this application, another operation or various operation variants may further be performed. In addition, the steps may be performed in a sequence different from that presented in the foregoing embodiments, and it is possible that not all the operations in the foregoing embodiments are necessarily performed.

In embodiments of this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between associated objects. "At least one of the following" or a similar expression thereof means any combination of these items, including a single item or any combination of a plurality of items. For example, at least one of a, b, and c may represent a, b, c, a and b, a and c, b and c, or a, b, and c, where a, b, and c may be singular or plural.

A person of ordinary skill in the art may be aware that the units, algorithms, and steps described in embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

In the several embodiments provided in this application, when any function is implemented in a form of a software functional unit and sold or used as an independent product, the function may be stored in a computer-readable storage medium. Based on such an understanding, the technical solutions in this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The storage medium includes any medium that can store program code, for example, a USB flash drive, a removable hard disk drive, a read-only memory (Read-Only Memory, ROM for short below), a random access memory (Random Access Memory, RAM for short below), a magnetic disk, or an optical disc.

Further embodiments of the present invention are provided in the following. It should be noted that the numbering used in the following section does not necessarily need to comply with the numbering used in the previous sections.

Embodiment 1. A power supply apparatus, wherein the power supply apparatus comprises a three-phase transformer and a winding switching switch module, the three-phase transformer comprises three primary-side windings and three secondary-side windings, each of the three primary-side windings is configured to be connected to a primary-side three-phase bridge arm circuit, each of the three secondary-side windings is configured to be connected to a secondary-side three-phase bridge arm circuit, the winding switching switch module comprises at least one of a winding connection switching switch group or a winding turn number switching switch group, and the winding switching switch module is configured to switch a turns ratio or a connection manner of the three-phase transformer; the winding connection switching switch group is configured to switch a connection manner of the three primary-side windings or a connection manner of the three secondary-side windings, wherein the connection manner of the three primary-side windings or the connection manner of the three secondary-side windings comprises a sequential connection or a one-end interconnection; and the winding turn number switching switch group is configured to switch turn numbers of the three primary-side windings or turn numbers of the three secondary-side windings, wherein each of the three primary-side windings or the three secondary-side windings comprises a tap.

Embodiment 2. The power supply apparatus according to embodiment 1, wherein one end of the three-phase primary-side winding is configured to be connected to each of three bridge arm midpoints of the primary-side three-phase bridge arm circuit, one end of the three-phase secondary-side winding is configured to be connected to each of three bridge arm midpoints of the secondary-side three-phase bridge arm circuit, and the winding connection switching switch group comprises at least one of a primary-side winding connection switching switch group or a secondary-side winding connection switching switch; the primary-side winding connection switching switch group is configured to connect the other end of each of the three primary-side windings and a common end of the three primary-side windings, or is configured to sequentially connect the three primary-side windings through the other end of each of the three primary-side windings; and the secondary-side winding connection switching switch group is configured to connect the other end of each of the three secondary-side windings and a common end of the three secondary-side windings, or is configured to sequentially connect the three secondary-side windings through the other end of each of the three secondary-side windings.

Embodiment 3. The power supply apparatus according to embodiment 2, wherein each of the primary-side winding connection switching switch group and the secondary-side winding connection switching switch group comprises three winding connection switching switches, each winding connection switching switch comprises a fixed end and two switching ends, the fixed end of each of the three winding connection switching switches is configured to be connected to the other end of each of the three primary-side windings or the other end of each of the three secondary-side windings, one switching end of each of the three winding connection switching switches is configured to connect to one switching end of each of the other two of the three winding connection switching switches, to form the common end of the three primary-side windings or the common end of the three secondary-side windings, and the other switching end of each of the three winding connection switching switches is configured to be connected to one end of each of the three primary-side windings or one end of each of the three secondary-side windings.

Embodiment 4. The power supply apparatus according to embodiment 1, wherein one end of each of the three primary-side windings is configured to be connected to each of three bridge arm midpoints of the primary-side three-phase bridge arm circuit, one end of each of the three secondary-side windings is configured to be connected to each of three bridge arm midpoints of the secondary-side three-phase bridge arm circuit, and the winding turn number switching switch group comprises at least one of a primary-side winding turn number switching switch group or a secondary-side winding turn number switching switch group; the primary-side winding turn number switching switch group is configured to connect the other end of each of the three primary-side windings or the tap of each of the three primary-side windings and a common end of the three primary-side windings, or is configured to sequentially connect the three primary-side windings through the other end of each of the three primary-side windings or the tap of each of the three primary-side windings; and the secondary-side winding turn number switching switch group is configured to connect the other end of each of the three secondary-side windings or the tap of each of the three secondary-side windings and a common end of the three secondary-side windings, or is configured to sequentially connect the three secondary-side windings through the other end of each of the three secondary-side windings or the tap of each of the three secondary-side windings.

Embodiment 5. The power supply apparatus according to embodiment 4, wherein at least one of the primary-side winding turn number switching switch group or the secondary-side winding turn number switching switch group comprises three winding turn number switching switches, each winding turn number switching switch comprises a fixed end and two switching ends, fixed ends of the three winding turn number switching switches are configured to be connected, to form the common end of the three primary-side windings, one switching end of each of the three winding turn number switching switches is configured to be connected to the other end of each of the three primary-side windings or the other end of each of the three secondary-side windings, and the other switching end of each of the three winding turn number switching switches is configured to be connected to the tap of each of the three primary-side windings or the tap of each of the three secondary-side windings.

Embodiment 6. The power supply apparatus according to embodiment 1, wherein the winding switching switch module comprises at least one of a primary-side winding switching switch module or a secondary-side winding switching switch module; the primary-side winding switching switch module is configured to connect the other end of each of the three primary-side windings or the tap of each of the three primary-side windings and a common end of the three primary-side windings, or is configured to sequentially connect the three primary-side windings through the other end of each of the three primary-side windings or the tap of each of the three primary-side windings; and the secondary-side winding switching switch module is configured to connect the other end of each of the three secondary-side windings or the tap of each of the three secondary-side windings and a common end of the three secondary-side windings, or is configured to sequentially connect the three secondary-side windings through the other end of each of the three secondary-side windings or the tap of each of the three secondary-side windings.

Embodiment 7. The power supply apparatus according to embodiment 6, wherein the primary-side winding switching switch module or the secondary-side winding switching switch module comprises three winding connection switching switches and three winding turn number switching switches, each winding connection switching switch comprises a fixed end and two switching ends, each winding turn number switching switch comprises a fixed end and two switching ends, and the fixed end of each winding connection switching switch is configured to be connected to the fixed end of each winding turn number switching switch; one switching end of each of the three winding connection switching switches is configured to be connected to one switching end of each of the other two of the three winding connection switching switches, to form the common end of the three primary-side windings, and the other switching end of each of the three winding connection switching switches is configured to be connected to one end of each of the three primary-side windings; or one switching end of each of the three winding connection switching switches is configured to be connected to one switching end of each of the other two of the three winding connection switching switches, to form the common end of the three secondary-side windings, and the other switching end of each of the three winding connection switching switches is configured to be connected to one end of each of the three secondary-side windings; and one switching end of each of the three winding turn number switching switches is configured to be connected to the other end of each of the three primary-side windings, and the other switching end of each of the three winding turn number switching switches is configured to be connected to the tap of each of the three primary-side windings; or one switching end of each of the three winding turn number switching switches is configured to be connected to the other end of each of the three secondary-side windings, and the other switching end of each of the three winding turn number switching switches is configured to be connected to the tap of each of the three secondary-side windings.

Embodiment 8. The power supply apparatus according to embodiment 1, wherein the winding switching switch module is configured to: switch at least one of the turns ratio or the connection manner of the three-phase transformer based on at least one of a voltage at two ends of the primary-side three-phase bridge arm circuit or a voltage at two ends of the secondary-side three-phase bridge arm circuit.

Embodiment 9. The power supply apparatus according to embodiment 8, wherein the winding switching switch module is configured to: switch at least one of the turn numbers or the connection manner of the three secondary-side windings in response to a result of comparing the voltage at the two ends of the secondary-side three-phase bridge arm circuit with at least one preset value.

Embodiment 10. The power supply apparatus according to embodiment 9, wherein the winding switching switch module is configured to: in response to that the voltage at the two ends of the secondary-side three-phase bridge arm circuit is greater than or equal to a first preset value, connect the other end of each of the three secondary-side windings and a common end of the three secondary-side windings; or in response to that the voltage at the two ends of the secondary-side three-phase bridge arm circuit is less than the first preset value, sequentially connect the three secondary-side windings through the other end of each of the three secondary-side windings.

Embodiment 11. The power supply apparatus according to embodiment 9, wherein the winding switching switch module is configured to: in response to that the voltage at the two ends of the secondary-side three-phase bridge arm circuit is greater than or equal to a second preset value, connect the other end of each of the three secondary-side windings and a common end of the three secondary-side windings; or in response to that the voltage at the two ends of the secondary-side three-phase bridge arm circuit is less than the second preset value, sequentially connect the three secondary-side windings through the tap of each of the three secondary-side windings.

Embodiment 12. The power supply apparatus according to embodiment 9, wherein the winding switching switch module is configured to: in response to that the voltage at the two ends of the secondary-side three-phase bridge arm circuit is greater than or equal to a third preset voltage value, connect the other end of each of the three secondary-side windings and a common end of the three secondary-side windings; in response to that the voltage at the two ends of the secondary-side three-phase bridge arm circuit is less than a fourth preset voltage value and is greater than or equal to a third preset voltage value, connect the tap of each of the three secondary-side windings and a common end of the three secondary-side windings; in response to that the voltage at the two ends of the secondary-side three-phase bridge arm circuit is less than a third preset voltage value and is greater than or equal to a fifth preset voltage value, sequentially connect the three secondary-side windings through the tap of each of the three secondary-side windings; or in response to that the voltage at the two ends of the secondary-side three-phase bridge arm circuit is less than a fifth preset voltage value, sequentially connect the three secondary-side windings through the other end of each of the three secondary-side windings.

Embodiment 13. The power supply apparatus according to embodiment 9, wherein the winding switching switch module is configured to: switch at least one of the turn numbers or the connection manner of the three secondary-side windings in response to a result of comparing the voltage at the two ends of the primary-side three-phase bridge arm circuit with at least one preset value.

Embodiment 14. A three-phase transformer circuit, wherein the three-phase transformer comprises three primary-side windings, three secondary-side windings, and a winding switching switch module, the three primary-side windings and the three secondary-side windings transmit a three-phase alternating current through a magnetic core coupling of the three-phase transformer, and the winding switching switch module comprises at least one of a winding connection switching switch group or a winding turn number switching switch group; the winding connection switching switch group is configured to switch a connection manner of at least one of the three primary-side windings or the three secondary-side windings, wherein a connection manner of the three primary-side windings or a connection manner of the three secondary-side windings comprises a two-end sequential connection or a one-end connection; and the winding turn number switching switch group is configured to switch turn numbers of at least one of the three primary-side windings or the three secondary-side windings, wherein each of the three primary-side windings or the three secondary-side windings comprises a tap.

Embodiment 15. A charging pile, wherein the charging pile is configured to charge an electric vehicle or receive power supplied by an electric vehicle, and the charging pile comprises a previous-stage circuit and a power supply apparatus; the previous-stage circuit is configured to provide a direct current to the power supply apparatus, or is configured to receive power supplied by the power supply apparatus; and the power supply apparatus is configured to: receive a direct current, and charge the electric vehicle, or is configured to: receive power supplied by the electric vehicle, and output a direct current to the previous-stage circuit, and the power supply apparatus is described according to embodiments 1 to 13, or the power supply apparatus comprises a primary-side three-phase bridge arm circuit, a secondary-side three-phase bridge arm circuit, and the three-phase transformer circuit according to embodiment 14.

The foregoing descriptions are merely specific implementations of this application. Any variation or replacement readily figured out by a person skilled in the art within the technical scope disclosed in this application shall fall within the protection scope of this application. The protection scope of this application shall be subject to the protection scope of the claims.

## Claims

1. A power supply apparatus, wherein the power supply apparatus comprises a three-phase transformer and a winding switching switch module, the three-phase transformer comprises three primary-side windings and three secondary-side windings, each of the three primary-side windings is configured to be connected to a primary-side three-phase bridge arm circuit, each of the three secondary-side windings is configured to be connected to a secondary-side three-phase bridge arm circuit, the winding switching switch module comprises a winding connection switching switch group or a winding turn number switching switch group, and the winding switching switch module is configured to switch a turns ratio or a connection manner of the three-phase transformer;
the winding connection switching switch group is configured to switch a connection manner of the three primary-side windings or a connection manner of the three secondary-side windings, wherein the connection manner of the three primary-side windings or the connection manner of the three secondary-side windings comprises a sequential connection or a one-end interconnection; and
the winding turn number switching switch group is configured to switch turn numbers of the three primary-side windings or turn numbers of the three secondary-side windings, wherein each of the three primary-side windings or the three secondary-side windings comprises a tap.

2. The power supply apparatus according to claim 1, wherein one end of the three-phase primary-side winding is configured to be connected to each of three bridge arm midpoints of the primary-side three-phase bridge arm circuit, one end of the three-phase secondary-side winding is configured to be connected to each of three bridge arm midpoints of the secondary-side three-phase bridge arm circuit, and the winding connection switching switch group comprises at least one of a primary-side winding connection switching switch group or a secondary-side winding connection switching switch;
the primary-side winding connection switching switch group is configured to connect the other end of each of the three primary-side windings and a common end of the three primary-side windings, or is configured to sequentially connect the three primary-side windings through the other end of each of the three primary-side windings; and
the secondary-side winding connection switching switch group is configured to connect the other end of each of the three secondary-side windings and a common end of the three secondary-side windings, or is configured to sequentially connect the three secondary-side windings through the other end of each of the three secondary-side windings.

3. The power supply apparatus according to claim 2, wherein each of the primary-side winding connection switching switch group and the secondary-side winding connection switching switch group comprises three winding connection switching switches, each winding connection switching switch comprises a fixed end and two switching ends, the fixed end of each of the three winding connection switching switches is configured to be connected to the other end of each of the three primary-side windings or the other end of each of the three secondary-side windings, one switching end of each of the three winding connection switching switches is configured to connect to one switching end of each of the other two of the three winding connection switching switches, to form the common end of the three primary-side windings or the common end of the three secondary-side windings, and the other switching end of each of the three winding connection switching switches is configured to be connected to one end of each of the three primary-side windings or one end of each of the three secondary-side windings.

4. The power supply apparatus according to claim 1, wherein one end of each of the three primary-side windings is configured to be connected to each of three bridge arm midpoints of the primary-side three-phase bridge arm circuit, one end of each of the three secondary-side windings is configured to be connected to each of three bridge arm midpoints of the secondary-side three-phase bridge arm circuit, and the winding turn number switching switch group comprises at least one of a primary-side winding turn number switching switch group or a secondary-side winding turn number switching switch group;
the primary-side winding turn number switching switch group is configured to connect the other end of each of the three primary-side windings or the tap of each of the three primary-side windings and a common end of the three primary-side windings, or is configured to sequentially connect the three primary-side windings through the other end of each of the three primary-side windings or the tap of each of the three primary-side windings; and
the secondary-side winding turn number switching switch group is configured to connect the other end of each of the three secondary-side windings or the tap of each of the three secondary-side windings and a common end of the three secondary-side windings, or is configured to sequentially connect the three secondary-side windings through the other end of each of the three secondary-side windings or the tap of each of the three secondary-side windings.

5. The power supply apparatus according to claim 4, wherein at least one of the primary-side winding turn number switching switch group or the secondary-side winding turn number switching switch group comprises three winding turn number switching switches, each winding turn number switching switch comprises a fixed end and two switching ends, fixed ends of the three winding turn number switching switches are configured to be connected, to form the common end of the three primary-side windings, one switching end of each of the three winding turn number switching switches is configured to be connected to the other end of each of the three primary-side windings or the other end of each of the three secondary-side windings, and the other switching end of each of the three winding turn number switching switches is configured to be connected to the tap of each of the three primary-side windings or the tap of each of the three secondary-side windings.

6. The power supply apparatus according to claim 1, wherein the winding switching switch module comprises at least one of a primary-side winding switching switch module or a secondary-side winding switching switch module;
the primary-side winding switching switch module is configured to connect the other end of each of the three primary-side windings or the tap of each of the three primary-side windings and a common end of the three primary-side windings, or is configured to sequentially connect the three primary-side windings through the other end of each of the three primary-side windings or the tap of each of the three primary-side windings; and
the secondary-side winding switching switch module is configured to connect the other end of each of the three secondary-side windings or the tap of each of the three secondary-side windings and a common end of the three secondary-side windings, or is configured to sequentially connect the three secondary-side windings through the other end of each of the three secondary-side windings or the tap of each of the three secondary-side windings.

7. The power supply apparatus according to claim 6, wherein the primary-side winding switching switch module or the secondary-side winding switching switch module comprises three winding connection switching switches and three winding turn number switching switches, each winding connection switching switch comprises a fixed end and two switching ends, each winding turn number switching switch comprises a fixed end and two switching ends, and the fixed end of each winding connection switching switch is configured to be connected to the fixed end of each winding turn number switching switch;
one switching end of each of the three winding connection switching switches is configured to be connected to one switching end of each of the other two of the three winding connection switching switches, to form the common end of the three primary-side windings, and the other switching end of each of the three winding connection switching switches is configured to be connected to one end of each of the three primary-side windings; or one switching end of each of the three winding connection switching switches is configured to be connected to one switching end of each of the other two of the three winding connection switching switches, to form the common end of the three secondary-side windings, and the other switching end of each of the three winding connection switching switches is configured to be connected to one end of each of the three secondary-side windings; and
one switching end of each of the three winding turn number switching switches is configured to be connected to the other end of each of the three primary-side windings, and the other switching end of each of the three winding turn number switching switches is configured to be connected to the tap of each of the three primary-side windings; or one switching end of each of the three winding turn number switching switches is configured to be connected to the other end of each of the three secondary-side windings, and the other switching end of each of the three winding turn number switching switches is configured to be connected to the tap of each of the three secondary-side windings.

8. The power supply apparatus according to claim 1, wherein the winding switching switch module is configured to:
switch at least one of the turns ratio or the connection manner of the three-phase transformer based on at least one of a voltage at two ends of the primary-side three-phase bridge arm circuit or a voltage at two ends of the secondary-side three-phase bridge arm circuit.

9. The power supply apparatus according to claim 8, wherein the winding switching switch module is configured to:
switch at least one of the turn numbers or the connection manner of the three secondary-side windings in response to a result of comparing the voltage at the two ends of the secondary-side three-phase bridge arm circuit with at least one preset value.

10. The power supply apparatus according to claim 9, wherein the winding switching switch module is configured to:
in response to that the voltage at the two ends of the secondary-side three-phase bridge arm circuit is greater than or equal to a first preset value, connect the other end of each of the three secondary-side windings and a common end of the three secondary-side windings; or
in response to that the voltage at the two ends of the secondary-side three-phase bridge arm circuit is less than the first preset value, sequentially connect the three secondary-side windings through the other end of each of the three secondary-side windings.

11. The power supply apparatus according to claim 9, wherein the winding switching switch module is configured to:
in response to that the voltage at the two ends of the secondary-side three-phase bridge arm circuit is greater than or equal to a second preset value, connect the other end of each of the three secondary-side windings and a common end of the three secondary-side windings; or
in response to that the voltage at the two ends of the secondary-side three-phase bridge arm circuit is less than the second preset value, sequentially connect the three secondary-side windings through the tap of each of the three secondary-side windings.

12. The power supply apparatus according to claim 9, wherein the winding switching switch module is configured to:
in response to that the voltage at the two ends of the secondary-side three-phase bridge arm circuit is greater than or equal to a third preset voltage value, connect the other end of each of the three secondary-side windings and a common end of the three secondary-side windings;
in response to that the voltage at the two ends of the secondary-side three-phase bridge arm circuit is less than a fourth preset voltage value and is greater than or equal to a third preset voltage value, connect the tap of each of the three secondary-side windings and a common end of the three secondary-side windings;
in response to that the voltage at the two ends of the secondary-side three-phase bridge arm circuit is less than a third preset voltage value and is greater than or equal to a fifth preset voltage value, sequentially connect the three secondary-side windings through the tap of each of the three secondary-side windings; or
in response to that the voltage at the two ends of the secondary-side three-phase bridge arm circuit is less than a fifth preset voltage value, sequentially connect the three secondary-side windings through the other end of each of the three secondary-side windings.

13. The power supply apparatus according to claim 9, wherein the winding switching switch module is configured to:
switch at least one of the turn numbers or the connection manner of the three secondary-side windings in response to a result of comparing the voltage at the two ends of the primary-side three-phase bridge arm circuit with at least one preset value.

14. A three-phase transformer circuit, wherein the three-phase transformer comprises three primary-side windings, three secondary-side windings, and a winding switching switch module, the three primary-side windings and the three secondary-side windings transmit a three-phase alternating current through a magnetic core coupling of the three-phase transformer, and the winding switching switch module comprises at least one of a winding connection switching switch group or a winding turn number switching switch group;
the winding connection switching switch group is configured to switch a connection manner of at least one of the three primary-side windings or the three secondary-side windings, wherein a connection manner of the three primary-side windings or a connection manner of the three secondary-side windings comprises a two-end sequential connection or a one-end connection; and
the winding turn number switching switch group is configured to switch turn numbers of at least one of the three primary-side windings or the three secondary-side windings, wherein each of the three primary-side windings or the three secondary-side windings comprises a tap.

15. A charging pile, wherein the charging pile is configured to charge an electric vehicle or receive power supplied by an electric vehicle, and the charging pile comprises a previous-stage circuit and a power supply apparatus;
the previous-stage circuit is configured to provide a direct current to the power supply apparatus, or is configured to receive power supplied by the power supply apparatus; and
the power supply apparatus is configured to: receive a direct current, and charge the electric vehicle, or is configured to: receive power supplied by the electric vehicle, and output a direct current to the previous-stage circuit, and the power supply apparatus is described according to claims 1 to 13, or the power supply apparatus comprises a primary-side three-phase bridge arm circuit, a secondary-side three-phase bridge arm circuit, and the three-phase transformer circuit according to claim 14.
